# EUROPEAN PATENT SPECIFICATION

(11) **EP 2 843 535 B1**
(45) Date of publication and mention of the grant of the patent: **28.02.2018**
(21) Application number: 14181909.4
(22) Date of filing: 22.08.2014
(51) Int. Cl.: G06F 3/0488, A61F 4/00

(54) **Apparatus and method of setting gesture in electronic device**
Vorrichtung und Verfahren für gesteneinstellung in einer elektronischen Vorrichtung
Appareil et procédé de réglage de geste dans un dispositif électronique

(30) Priority: 03.09.2013 KR 20130105770
(43) Date of publication of application: 04.03.2015
(73) Proprietor: Samsung Electronics Co., Ltd., Gyeonggi-do 443-742 (KR)
(72) Inventor: Cho, An-Ki, 443-742 Gyeonggi-do (KR); Song, Tai-Eui, 443-742 Gyeonggi-do (KR); Lee, Jae-Wook, 443-742 Gyeonggi-do (KR); Jegal, Yun, 443-742 Gyeonggi-do (KR); Tae, Eun-Ju, 443-742 Gyeonggi-do (KR)
(74) Representative: Nederlandsch Octrooibureau

(56) References cited:
- EP-A2- 2 251 776
- US-A1- 2010 001 961
- US-A1- 2011 246 952
- US-A1- 2013 120 279
- Anonymous: "forms - Jquery Validation: How to make fields red - Stack Overflow", , 29 May 2011 (2011-05-29), XP055329981, Retrieved from the Internet: URL:http://stackoverflow.com/questions/616 8926/jquery-validation-how-to-make-fields- red/6168987#6168987 [retrieved on 2016-12-16]
- blindtype: "BlindType - Demo1", , 17 July 2010 (2010-07-17), XP054977741, Retrieved from the Internet: URL:https://www.youtube.com/watch?v=M9b8Nl Md79w [retrieved on 2017-09-18]
- blindtype: "BlindType - Demo2", , 2 August 2010 (2010-08-02), XP054976169, Retrieved from the Internet: URL:https://www.youtube.com/watch?v=7gDF4o cLhQM [retrieved on 2015-10-26]

## Description

### TECHNICAL FIELD

The present disclosure relates to an electronic apparatus, and more particularly, to an apparatus and a method of setting a gesture in an electronic device.

### BACKGROUND

An electronic device, such as a smart phone and a tablet Personal Computer (PC), has provided a user with various useful functions through various applications. Thus, there is a tendency that the electronic device is changed to an apparatus enabling the user to use various types of information in addition to a voice communication function by providing various functions. The electronic device recognizes a gesture input from a user and executes a specific function.

In the meantime, since a recognition reference of the gesture of the electronic device is fixed, a unique touch sign of a user is not reflected. Further, since whether a gesture is input is determined based on a gesture recognition reference determined based on an ordinary person, such that when a user is a disabled person having a difficulty in inputting a touch, a success rate of recognizing a touch input of the user is low.

US 2013 / 120279 A1 relates to a system and methods for touch gesture recognition. A software developer may create a set of custom touch gestures by training a gesture development tool. A new touch gesture may be input to the tool by repeatedly executing the gesture on a touch-enabled device or by depicting parameters of the gesture in a graphical language. A developer may provide a software command associated with the gesture. A unique, software-recognizable gesture descriptor may be created to represent each gesture. The gesture descriptor, a unique identifier of the gesture descriptor and the command associated with the gesture may all be stored as an entry in a configuration file. The file may be embedded in a software application and may be used by a gesture classification module to translate user touch gestures applied to the software application into commands to be executed by the software application.

US 2011 / 246952 A1 relates to an electronic device capable of defining touch gesture. The electronic device includes a touch panel, a touch detection circuit, a processing unit, and a storage unit. The touch detection circuit produces touch signals in response to user touch operation on the touch panel. The processing unit includes a gesture recognition module and a defining module. The gesture recognition module receives the touch signals from the touch detection circuit, and recognizes touch gesture according to the touch signals. The defining module controls the electronic device to enter a defining module in response to user operation, and prompts the user to define a touch gesture for a function of the electronic device, and establish a map between the touch gesture input by the user and the function selected by the user, and store the map in the storage unit.

US 2010 / 001961 A1 relates to an electronic device capable of setting and editing information of a gesture performed on a touch pad. Such information may be the sensitivity of the double tap gesture on the touch pad. The touch pad may include a display where a user interface is displayed.

### SUMMARY

To address the above-discussed deficiencies, it is a primary object of the present disclosure to provide an apparatus and a method of setting a gesture by reflecting a unique touch signal of a user in an electronic device.

In accordance with an aspect of the present disclosure, an apparatus for setting a gesture in an electronic device is provided according to independent claim 1.

In accordance with another aspect of the present disclosure, a method according to independent claim 9 is provided for setting a gesture in an electronic device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates a block diagram showing an electronic device according to various example embodiments;
FIG. 2 illustrates a process of setting a gesture according to various example embodiments;
FIG. 3 illustrates a process of setting a gesture according to various example embodiments;
FIG. 4 illustrates a process of setting a gesture according to various example embodiments;
FIG. 5 illustrates a process of setting a gesture according to various example embodiments;
FIGS. 6A and 6B illustrate a process of setting a gesture according to various example embodiments;
FIGS. 7A and 7B illustrate a process of setting a gesture according to various example embodiments;
FIGS. 8A to 8F illustrate screens in which a gesture is set according to various example embodiments;
FIGS. 9A to 9F illustrate screens in which a gesture is set according to various example embodiments;
FIGS. 10A to 10I illustrate screens in which a gesture is set according to various example embodiments;
FIGS. 11A to 11G illustrate screens in which a gesture is set according to various example embodiments; and
FIGS. 12A to 12G illustrate screens in which a gesture is set according to various example embodiments.

### DETAILED DESCRIPTION

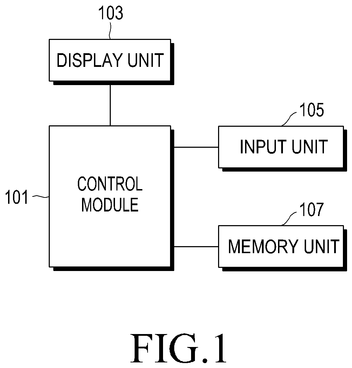

FIGURES 1 through 12G, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or method.

Hereinafter, various example embodiments of the present disclosure will be described in detail with reference to the accompanying drawings. Further, the detailed description of a known function and configuration that may make the purpose of the present disclosure unnecessarily ambiguous in describing the spirit of the present disclosure will be omitted.

An electronic device according to various example embodiments of the present disclosure is a easily portable and mobile electronic device, and may include, for example, a video phone, a mobile phone, a smart phone, an IMT-2000 (International Mobile Telecommunication 2000) terminal, a WCDMA terminal, a UMTS (Universal Mobile Telecommunication Service) terminal, a PDA (Personal Digital Assistant), a PMP (Portable Multimedia Player), a DMB (Digital Multimedia Broadcasting) terminal, an E-Book, a portable computer (for example, a notebook computer or a tablet computer), or a digital camera.

FIG. 1 illustrates a block diagram showing an electronic device according to various example embodiments of the present disclosure.

Referring to FIG. 1, the electronic device may include a control module 101, a display module 103, an input module 105, and a memory module 107.

Each constituent element will be described. The input module 105 includes keys for inputting number and character information and function keys for setting various functions, and the display module 103 displays an image signal on a screen and displays data requested to be output by the control module 101. When the display module 103 is implemented by a touch display screen, such as an electrostatic type or a resistive type, the input module 105 may include predetermined keys, and the display module 103 may partially replace a key input function of the input module 105.

Further, the memory module 107 includes a program memory and a data memory. The program memory may store a booting system and an operating system (hereinafter, referred to as the "OS") for controlling a general operation of the electronic device, and the data memory may store various data generated during an operation of the electronic device.

Further, the control module 101 performs a function of controlling a general operation of the electronic device. The control module 101 may generate gesture information based on a gesture input by a user, and set a gesture based on the generated gesture information.

In various example embodiments, the control module 101 may display a gesture setting menu, and confirm whether the gesture setting menu is selected by the user. Here, the gesture setting menu refers to a menu for setting a gesture.

When the gesture setting menu is selected, the control module 101 may display a gesture type menu. Here, the gesture type menu refers to a menu including the types of gesture recognizable by the electronic device. For example, the gesture type menu may include at least one of a tap and hold, a double tap, a flick, a zoom gesture, and a rotation gesture.

Further, the control module 101 may identify whether a specific gesture menu item is selected in the displayed gesture type menu by the user. For example, the control module 101 may confirm whether a menu item corresponding to the tap and hold among the tap and hold, the double tap, the flick, the zoom gesture, and the rotation gesture is selected.

When the specific gesture menu item is selected, the control module 101 may display a gesture setting region corresponding to the selected specific gesture menu item. For example, when the selected specific gesture menu item is the double tap, the control module 101 may display a gesture setting region including an input region for receiving an input of the double tap from the user.

Further, the control module 101 may confirm whether a gesture corresponding to the selected specific gesture menu item is input into the input region of the gesture setting region. For example, when the selected specific gesture menu item is the double tap, the control module 101 may confirm whether the double tap is input into the input region of the gesture setting region.

When the gesture is input, the control module 101 may generate gesture information corresponding to the input specific gesture, and store the generated gesture information in the memory module 107. Here, the gesture information is information related to the gesture input by the user.

For example, when the input specific gesture is the tap and hold, the gesture information may include a time from when the input region is input to when the touch is released. For another example, when the input specific gesture is the double tap, the gesture information may include a time from when the input region is first touched to when the touch is released, a time from when the input region is second touched to when the touch is released, and a time from when a touch of the input region is first released to when the input region is second touched.

For another example, when the input specific gesture is the flick, the gesture information may include a time from when the input region is touched to when the touch is released, a moving distance from the touch of the input region to the release of the touch, and a direction of the flick. For another example, when the input specific gesture is the zoom gesture, the gesture information may include a zoom ratio and a moving distance between a plurality of touched regions. For another example, when the input specific gesture is the rotation gesture, the gesture information may include a rotation ratio and a rotation angle of the touched region.

Further, the control module 101 may set a recognition reference of a corresponding gesture based on the gesture information corresponding to the corresponding gesture. In this embodiment, the control module 101 may set the recognition reference of the corresponding gesture so as to be customized to an input sign of the user by changing a setting value of a corresponding gesture included in a frame work of the electronic device based on the gesture information of the corresponding gesture.

For example, when the selected specific gesture menu item is the tap and hold, and the gesture information includes 4 seconds corresponding to a hold time from when the input region is touched to when the touch is released, the control module 101 may change the hold time of the tap and hold to 4 seconds based on the gesture information about the tap and hold. Further, when a gesture, in which the touch is maintained for 4 seconds, is input by the user, the control module 101 may determine that the input gesture meets the recognition reference of the tap and hold, and determine that the tap and hold is input.

Further, in various example embodiments, the control module 101 may display the gesture setting menu item, and confirm whether the gesture setting menu item is selected by the user. When the gesture setting menu item is selected, the control module 101 may display the gesture type menu.

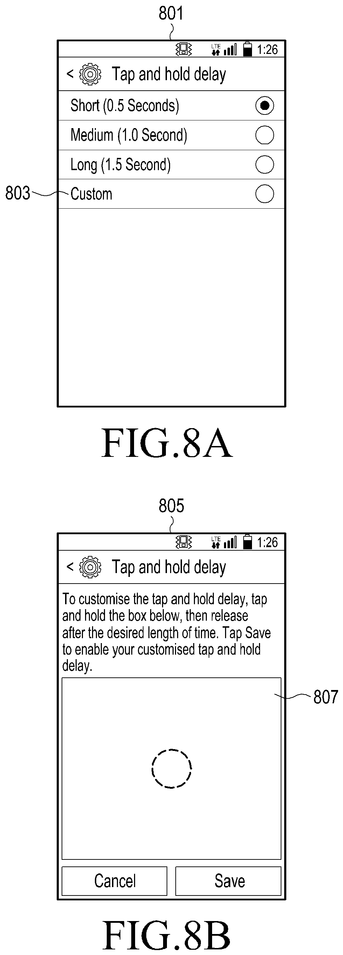

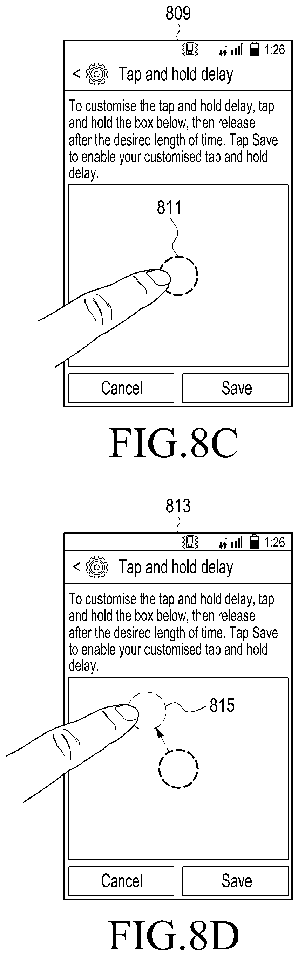

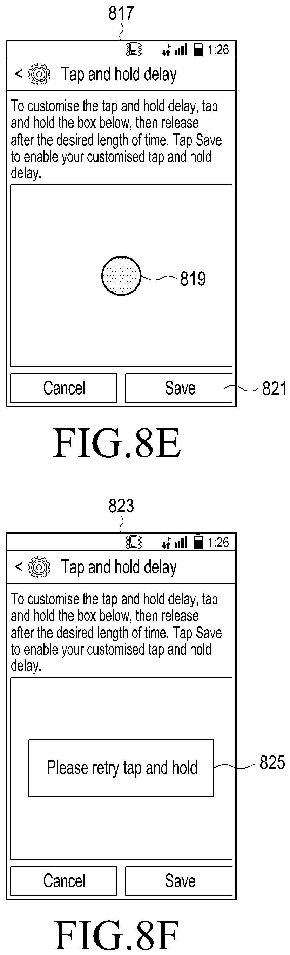

Further, the control module 101 may confirm whether the tap and hold menu item is selected in the displayed gesture type menu by the user. When the tap and hold menu item is selected, the control module 101 may display a gesture setting region corresponding to the tap and hold menu item. For example, when the selected specific gesture menu item is the tap and hold, the control module 101 may display a gesture setting region 807 including an input region for receiving an input of the tap and hold from the user like a screen 805 of FIG. 8B.

Further, the control module 101 may confirm whether the tap and hold is input into the input region of the gesture setting region by the user. For example, the control module 101 may confirm whether the tap and hold is input into an input region 811 like a screen 809 of FIG. 8C.

When the tap and hold is input, the control module 101 may confirm whether it is possible to generate tap and hold information, which is the gesture information corresponding to the tap and hold, based on a parameter (for example, a touch time or a touch release time) for the input tap and hold. Here, the tap and hold information is the gesture information corresponding to the tap and hold, and may include a time from when the input region is touched to when the touch is released.

When it may be unable to generate the tap and hold information, the control module 101 may output a notice message demanding re-inputting the tap and hold, and repeatedly perform an operation of receiving an input of the tap and hold from the user. For example, the control module 101 may generate and display a pop-up window requesting re-inputting the tap and hold like a screen 823 of FIG. 8F. For another example, the control module 101 may output a voice message requesting re-inputting the tap and hold.

When it is possible to generate the tap and hold information, the control module 101 may generate the tap and hold information that is the gesture information, and store the generated tap and hold information in the memory module 107. Further, the control module 101 may set the recognition reference of the tap and hold for the electronic device based on the tap and hold information. In this embodiment, the control module 101 may set the recognition reference of the tap and hold so as to be customized to the input sign of the user by changing a setting value of the tap and hold included in a frame work of the electronic device based on the tap and hold information.

For example, when the selected specific gesture menu item is the tap and hold, and the tap and hold information includes 4 seconds corresponding to a hold time from when the input region is touched to when the touch is released, the control module 101 may change the hold time of the tap and hold to 4 seconds based on the tap and hold information. Then, when the gesture, in which the touch is maintained for 4 seconds, is input, the control module 101 may determine that the input gesture meets the recognition reference of the tap and hold, and determine that the tap and hold is input.

Further, in various example embodiments, the control module 101 may display the gesture setting menu item, and confirm whether the gesture setting menu item is selected by the user. When the gesture setting menu item is selected, the control module 101 may display the gesture type menu.

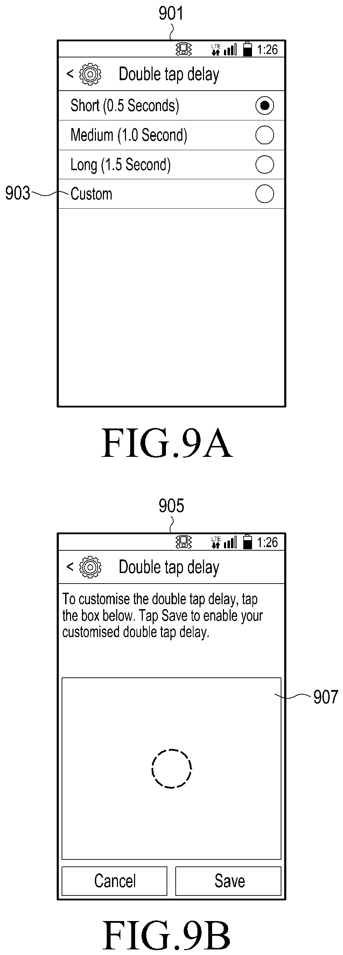

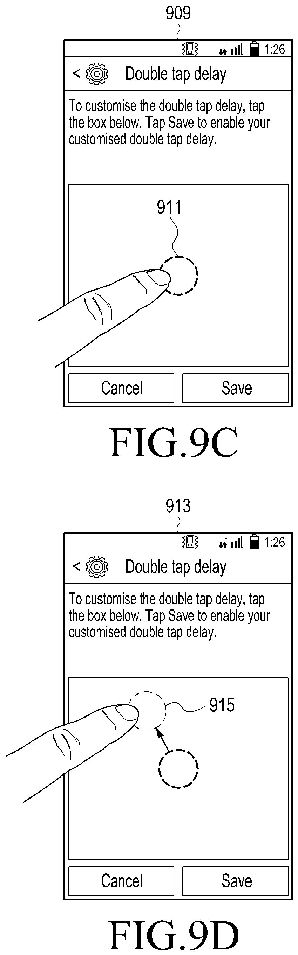

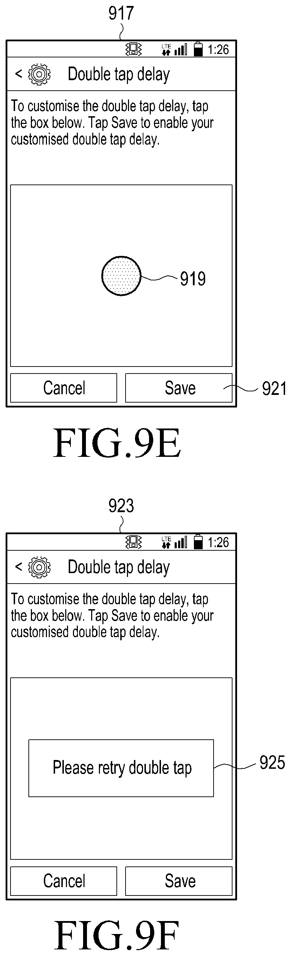

Further, the control module 101 may confirm whether a double tap menu item is selected in the displayed gesture type menu by the user. When the double tap menu item is selected, the control module 101 may display a gesture setting region corresponding to the double tap menu item. For example, when the selected specific gesture menu item is the double tap, the control module 101 may display a gesture setting region 907 including an input region for receiving an input of the double tap from the user like a screen 905 of FIG. 9B.

Further, the control module 101 may confirm whether the double tap is input into the input region of the gesture setting region by the user. For example, the control module 101 may confirm whether the gesture is input into an input region 911 like a screen 909 of FIG. 9C.

When the double tap is input, the control module 101 may confirm whether it is possible to generate double tap information, which is gesture information corresponding to the double tap, based on a parameter (for example, a touch time or a touch release time) for the input double tap. Here, the double tap information is the gesture information corresponding to the double tap, and may include a time from when the input region is first touched to when the touch is released, a time from when the input region is second touched to when the touch is released, and a time from a touch of the input region is first released to the input region is second touched.

When it may be unable to generate the double tap information, the control module 101 may output a notice message requesting re-inputting the double tap, and repeatedly perform an operation of receiving an input of the double tap from the user. For example, the control module 101 may generate and display a pop-up window requesting re-inputting the double tap like a screen 923 of FIG. 9F. For another example, the control module 101 may output a voice message requesting re-inputting the double tap.

When it is possible to generate the double tap information, the control module 101 may generate the double tap information, store the generated double tap information in the memory module 107, and then set the recognition reference of the double tap for the electronic device based on the double tap information. In this embodiment, the control module 101 may set the recognition reference of the double tap so as to be customized to the input sign of the user by changing a setting value of the double tap included in the frame work of the electronic device based on the double tap information.

For example, when the selected specific gesture menu item is the double tap, and the double tap information includes a time of 2 seconds from the input region is first touched to when the touch is released, a time of 2 seconds from the input region is second touched to when the touch is released, and a time of 3 seconds from the touch of the input region is first released to the input region is second touched, the control module 101 may change a double tap touch interval to 3 seconds based on the double tap information. Then, when a gesture, in which an input time difference between a plurality of taps is 3 seconds, is input, the control module 101 may determine that the input gesture meets the recognition condition of the double tap, and determine that the double tap is input.

Further, in various example embodiments, the control module 101 may display the gesture setting menu and confirm whether the gesture setting menu item is selected by the user. When the gesture setting menu item is selected, the control module 101 may display the gesture type menu.

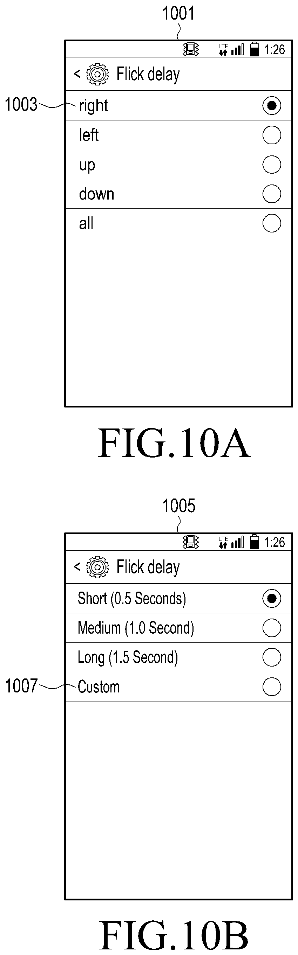

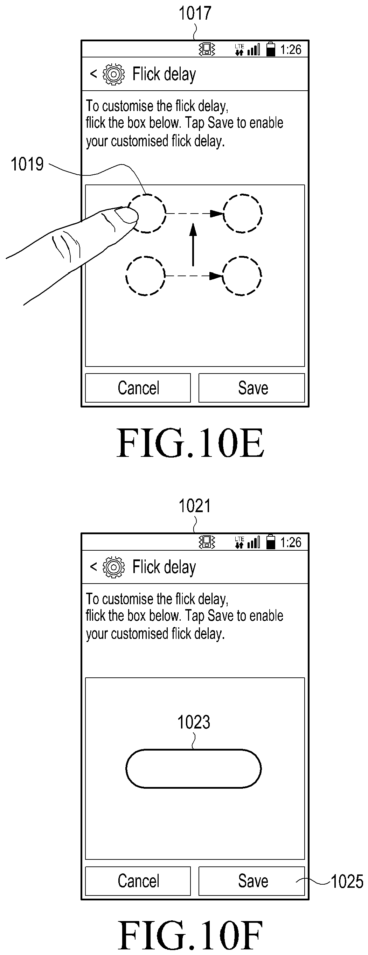

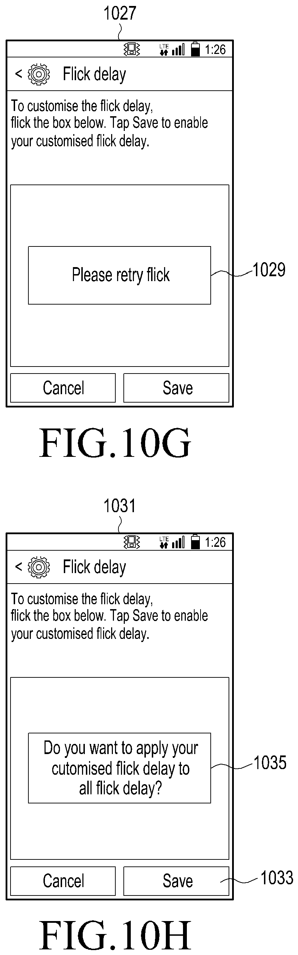

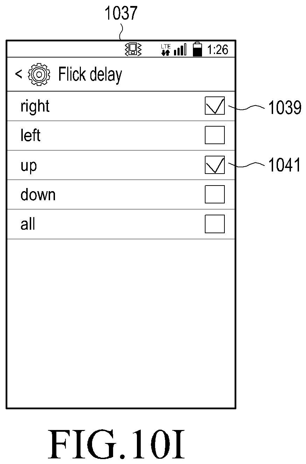

Further, the control module 101 may confirm whether a flick menu item is selected in the display gesture type menu by the user. When the gesture setting menu item is selected, the control module 101 may display the gesture type menu. Here, a flick direction type menu is a menu showing directions of the flick, and may include, for example, a right directional flick, a left directional flick, a down directional flick, and an up directional flick. For example, the control module 101 may display the flick direction type menu like a screen 1001 of FIG. 10A.

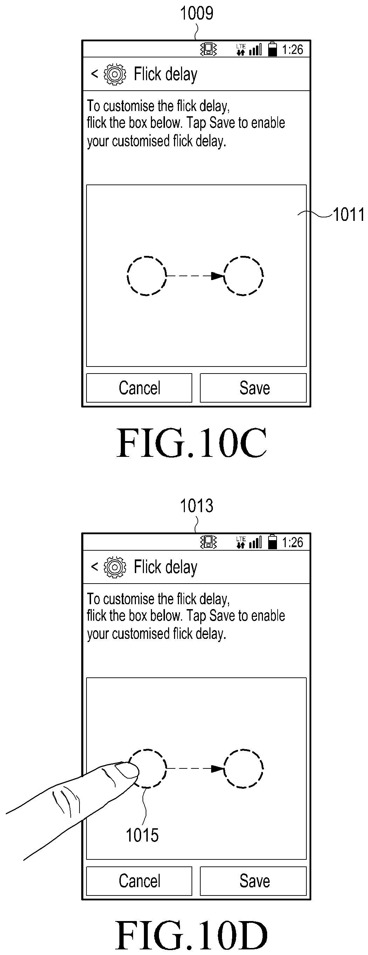

Further, the control module 101 may confirm whether a specific flick direction is selected in the displayed flick direction type menu by the user. When the specific flick direction is selected, the control module 101 may display a gesture setting region corresponding to the selected flick direction. For example, when the direction of the selected flick is the right direction, the control module 101 may display a gesture setting region 1011 including an input region for receiving an input of the right directional flick from the user like a screen 1009 of FIG. 10C.

Further, the control module 101 may confirm whether the flick is input into the input region of the gesture setting region by the user. For example, the control module 101 may confirm whether the gesture is input into an input region 1015 like a screen 1013 of FIG. 10D.

When the flick is input, the control module 101 may confirm whether it is possible to generate flick information, which is the gesture information corresponding to the flick, based on a parameter for the input flick (for example, a touch performance direction, a moving distance of the touch, or a touch time). Here, the flick information is the gesture information corresponding to the flick, and may include a time from when the input region is touched to when the touch is released, a moving distance from the touch of the input region to the release of the touch, and the direction of the flick.

When it may be unable to generate the flick information, the control module 101 may output a notice message demanding re-inputting the flick, and repeatedly perform an operation of receiving an input of the flick from the user. For example, the control module 101 may generate and display a pop-up window 1029 requesting re-inputting the flick like a screen 1027 of FIG. 10G. For another example, the control module 101 may output a voice message requesting re-inputting the flick.

When it is possible to generate the flick information, the control module 101 may generate the flick information, store the generated flick information in the memory module 107, and then set a recognition reference of the flick for the electronic device based on the flick information. In this embodiment, the control module 101 may set the recognition reference of the flick so as to be customized to the input sign of the user by changing a setting value of the flick included in the frame work of the electronic device based on the flick information.

For example, when the selected specific gesture menu item is the flick, and the flick information includes a time of 3 seconds from when the input region is touched to when the touch is released, a moving distance of 1 cm from where the input region is touched to where the touch is released, and the right direction that is the flick direction, the control module 101 may change the moving distance of the flick to 1 cm based on the flick information. Then, when a gesture, in which a direction of a touch is the right direction and a moving distance of the touch is 1 cm, is input, the control module 101 may determine that the gesture meets the recognition reference of the flick, and determine that the right direction flick is input.

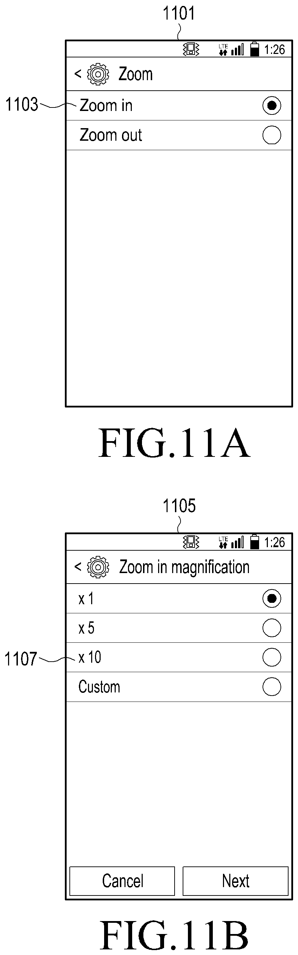

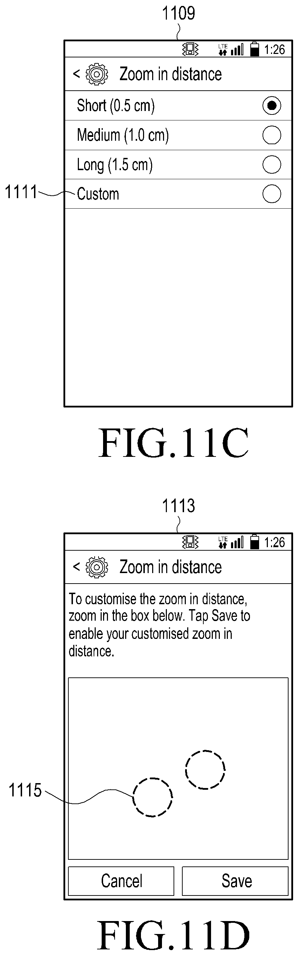

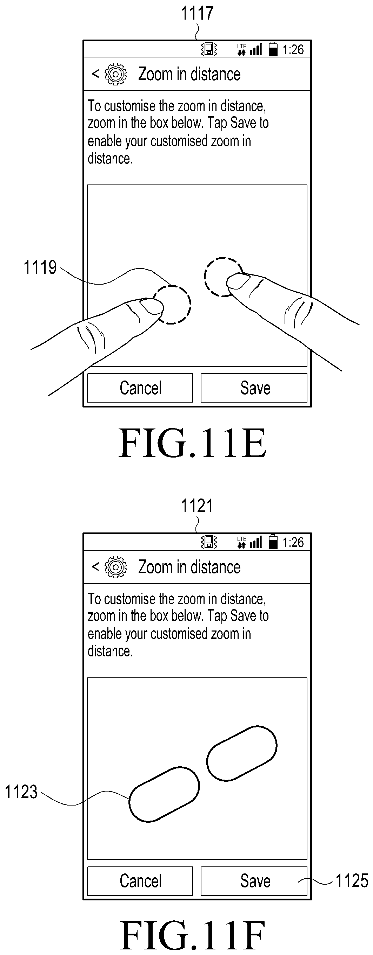

Further, in various example embodiments, the control module 101 may display the gesture setting menu and confirm whether the gesture setting menu item is selected by the user. When the gesture setting menu item is selected, the control module 101 may display the gesture type menu. Here, the zoom type menu is a menu showing the types of zoom, and may include, for example, a zoom-in gesture and a zoom-out gesture. For example, the control module 101 may display the zoom type menu like a screen 1101 of FIG. 11A.

Further, the control module 101 may confirm whether a zoom gesture menu item is selected in the displayed gesture type menu by the user. When the zoom gesture menu item is selected, the control module 101 may display the zoom type menu.

Further, the control module 101 may confirm whether a specific zoom gesture is selected in the displayed zoom type menu by the user. When the specific zoom gesture is selected, the control module 101 may display a zoom ratio menu showing a plurality of zoom ratios for the selected specific zoom gesture. For example, when the selected specific zoom gesture is the zoom-in gesture, the control module 101 may display a zoom ratio menu like a screen 1105 of FIG. 11B.

Further, the control module 101 may confirm whether a specific zoom ratio is selected in the zoom ratio menu by the user. When the specific zoom ratio is selected, the control module 101 may display a gesture setting region corresponding to the selected zoom gesture. For example, when the selected zoom gesture is the zoom-in gesture, the control module 101 may display a gesture setting region 1115 including an input region for receiving an input of the zoom-in gesture from the user like a screen 1113 of FIG. 11D.

Further, the control module 101 may confirm whether the zoom gesture is input into the input region of the gesture setting region by the user. For example, the control module 101 may confirm whether the zoom-in gesture is input into an input region 1119 like a screen 1117 of FIG. 11E.

When the zoom gesture is input, the control module 101 confirms whether it is possible to generate zoom gesture information, which is the gesture information corresponding to the zoom gesture, based on a parameter for the input zoom gesture (for example, a moving distance between the plurality or touched regions). Here, the zoom gesture information is the gesture information corresponding to the zoom, and may include the zoom ratio and the moving distance between the plurality of touched regions.

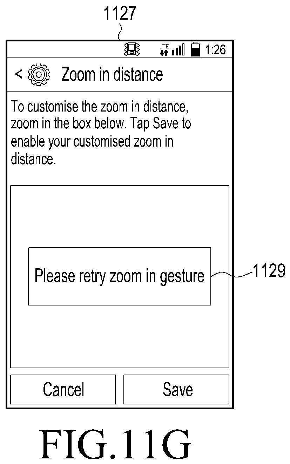

When it may be unable to generate the zoom gesture information, the control module 101 may output a notice message demanding re-inputting the zoom gesture, and repeatedly perform an operation of receiving an input of the zoom gesture from the user. For example, the control module 101 may generate and display a pop-up window 1129 requesting re-inputting the flick like a screen 1127 of FIG. 11G. For another example, the control module 101 may output a voice message requesting re-inputting the zoom-in gesture.

When it is possible to generate the zoom gesture information, the control module 101 may generate the zoom gesture information, store the generated zoom gesture information in the memory module 107, and then set a recognition reference of the zoom gesture for the electronic device based on the zoom gesture information. In this embodiment, the control module 101 may set the recognition reference of the zoom gesture so as to be customized to the input sign of the user by changing a setting value of the zoom gesture included in the frame work of the electronic device based on the zoom gesture information.

For example, when the selected specific gesture menu item is the zoom gesture, and the zoom gesture information includes the zoom ratio of 10 times, and the moving distance between the plurality of touched regions is 1 cm, the control module 101 may change the moving distance between the plurality of touched regions for the zoom-in to 1 cm based on the zoom gesture information. Then, when a gesture, in which a moving distance between a plurality of touched regions is 1 cm, is input on a specific image, the control module 101 may determine that the input gesture meets the recognition reference of the zoom-in gesture, and enlarge the specific image by 10 times (10 (selected zoom ratio) × 1 (moving distance)).

Further, in various example embodiments, the control module 101 may display the gesture setting menu and confirm whether the gesture setting menu item is selected by the user. When the gesture setting menu item is selected, the control module 101 may display the gesture type menu.

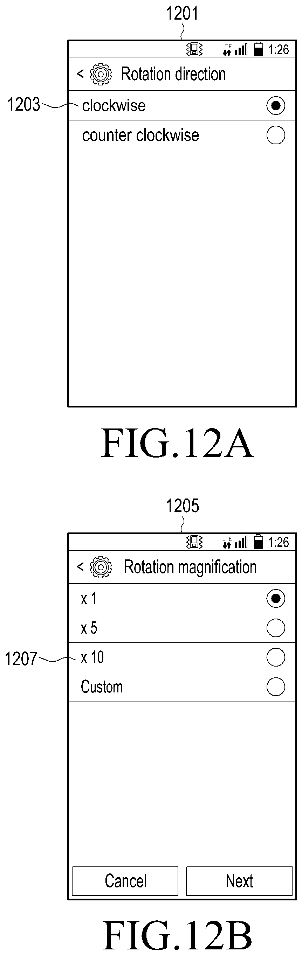

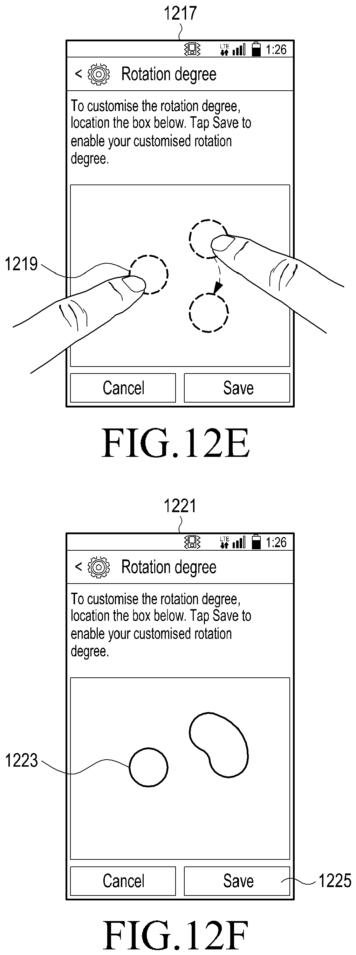

Further, the control module 101 may confirm whether a rotation gesture menu item is selected in the displayed gesture type menu by the user. When the rotation menu item is selected, the control module 101 may display a rotation direction menu. Here, the rotation direction menu is a menu showing the direction types of rotation, and may include, for example, a clockwise direction and a counterclockwise direction. For example, the control module 101 may display the rotation direction menu like a screen 1201 of FIG. 12A.

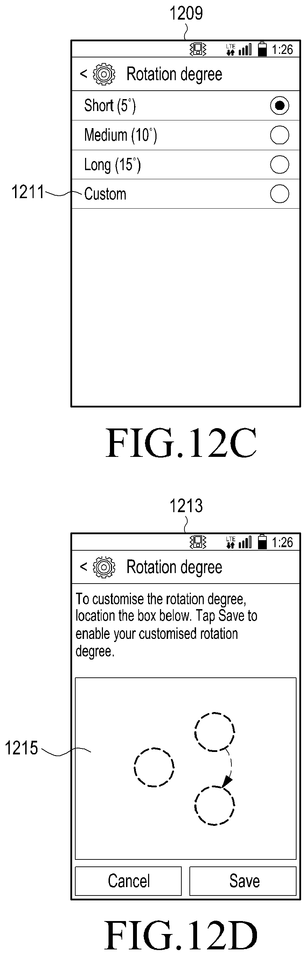

Further, the control module 101 may confirm whether a specific rotation direction is selected in the displayed rotation direction menu by the user. When a specific rotation direction is selected, the control module 101 may display a rotation ratio menu showing a plurality of rotation ratios for the selected specific rotation direction. For example, when the selected specific rotation direction is the clockwise direction, the control module 101 may display a rotation ratio menu like a screen 1205 of FIG. 12C.

Further, the control module 101 may confirm whether a specific rotation ratio is selected in the rotation ratio menu by the user. When the specific rotation ratio is selected, the control module 101 may display a gesture setting region corresponding to the selected rotation direction. For example, when the direction of the selected rotation is the clockwise direction, the control module 101 may display a gesture setting region 1215 including an input region for receiving an input of the clockwise rotation gesture from the user like a screen 1213 of FIG. 12D.

Further, the control module 101 may confirm whether the rotation gesture is input into the input region of the gesture setting region by the user. For example, the control module 101 may confirm whether the clockwise rotation gesture is input into an input region 1219 like a screen 1217 of FIG. 12E.

When the rotation gesture is input, the control module 101 confirms whether it is possible to generate rotation gesture information, which is the gesture information corresponding to the rotation gesture, based on a parameter for the input rotation gesture (for example, a rotation angle of a touched region). Here, the rotation gesture information is the gesture information corresponding to the rotation, and may include a rotation ratio and a rotation angle of the touched region.

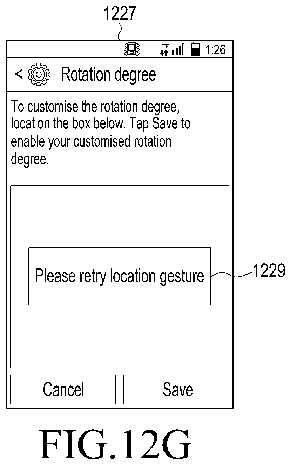

When it may be unable to generate the rotation gesture information, the control module 101 may output a notice message demanding re-inputting the rotation gesture, and repeatedly perform an operation of receiving an input of the rotation gesture from the user. For example, the control module 101 may generate and display a pop-up window 1229 requesting re-inputting the clockwise rotation gesture like a screen 1227 of FIG. 12G. For another example, the control module 101 may output a voice message requesting re-inputting the rotation gesture.

When it is possible to generate the rotation gesture information, the control module 101 may generate the rotation gesture information, store the generated rotation gesture information in the memory module 107, and then set a recognition reference of the rotation gesture for the electronic device based on the rotation gesture information. In this embodiment, the control module 101 may set the recognition reference of the rotation gesture so as to be customized to the input sign of the user by changing a setting value of the rotation gesture included in the frame work of the electronic device based on the rotation gesture information.

For example, when a selected specific gesture menu item is the rotation gesture and the rotation gesture information includes 10 times that is the rotation ratio, and 10° that is the rotation angle of the touched region, the control module 101 may change the rotation angle of the touched region for the rotation to 10° based on the rotation gesture information. Then, when a gesture, in which a rotation angle of a touched region is 10°, is input on a specific image, the control module 101 may determine that the input gesture meets the recognition reference of the rotation gesture and rotate the specific image by 100° (10° × 10 times)

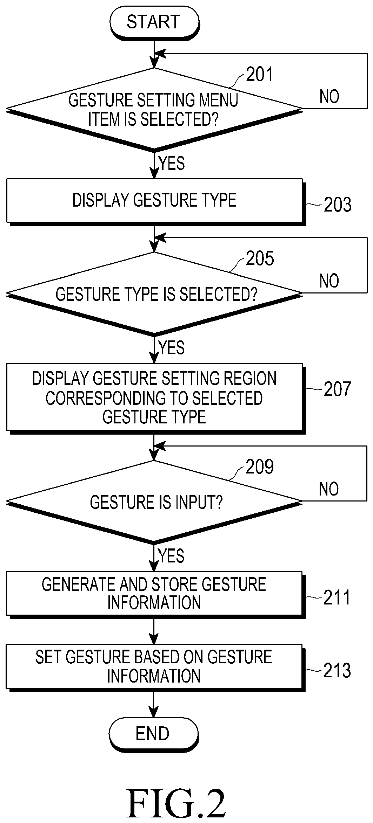

FIG. 2 illustrates a process of setting a gesture according to various example embodiments.

Referring to FIG. 2, in operation 201, the control module 101 may display a gesture setting menu and confirm whether a gesture setting menu item is selected by a user. Here, the gesture setting menu refers to a menu for setting a gesture.

When the gesture setting menu item is selected, the control module 101 may proceed to operation 203, but otherwise, the control module 101 may repeatedly perform operation 201.

When the control module 101 proceeds to operation 203, the control module 101 may display a gesture type menu, and then proceed to operation 205. Here, the gesture type menu refers to a menu including the types of gesture recognizable by the electronic device. For example, the gesture type menu may include at least one of a tap and hold, a double tap, a flick, a zoom gesture, and a rotation gesture.

Further, the control module 101 may confirm whether a specific gesture menu item is selected in the displayed gesture type menu in operation 205. For example, the control module 101 may confirm whether a menu item corresponding to the tap and hold is selected among the tap and hold, the double tap, the flick, the zoom gesture, and the rotation gesture.

When the specific gesture menu item is selected, the control module 101 may proceed to operation 207, but otherwise, the control module 101 may repeatedly perform operation 205.

When the control module 101 proceeds to operation 207, the control module 101 may display a gesture setting region corresponding to the selected specific gesture menu item, and then proceed to operation 209. For example, when the selected specific gesture menu item is the double tap, the control module 101 may display a gesture setting region including an input region for receiving an input of the double tap from the user.

Further, in operation 209, the control module 101 may confirm whether a gesture corresponding to the selected specific gesture menu item is input into the input region of the gesture setting region by the user. For example, when the selected specific gesture menu item is the double tap, the control module 101 may confirm whether the double tap is input into the input region of the gestures setting region.

When the gesture is input, the control module 101 may proceed to operation 211, but otherwise, the control module 101 may repeatedly perform operation 209.

When the control module 101 proceeds to operation 211, the control module 101 may generate gesture information corresponding to the input specific gesture, store the generated gesture information in the memory module 107, and then proceed to operation 213. Here, the gesture information is information related to the gesture input by the user.

For example, when the input specific gesture is the tap and hold, the gesture information may include a time from when the input region is touched to when the touch is released. For another example, when the input specific gesture is the double tap, the gesture information may include a time from when the input region is first touched to when the touch is released, a time from when the input region is second touched to when the touch is released, and a time from when a touch of the input region is first released to when the input region is second touched.

For another example, when the input specific gesture is the flick, the gesture information may include a time from when the input region is touched to when the touch is released, a moving distance from the touch of the input region to the release of the touch, and a direction of the flick. For another example, when the input specific gesture is the zoom gesture, the gesture information may include a zoom ratio and a moving distance between a plurality of touched regions. For another example, when the input specific gesture is the rotation gesture, the gesture information may include a rotation ratio and a rotation angle of the touched region.

In operation 213, the control module 101 may set a recognition reference of the corresponding gesture based on the gesture information corresponding to the corresponding gesture. In this embodiment, the control module 101 may set the recognition reference of the corresponding gesture so as to be customized to an input sign of the user by changing a setting value of the corresponding gesture included in a frame work of the electronic device based on the gesture information about the corresponding gesture.

For example, when the selected specific gesture menu item is the tap and hold, and the gesture information includes 4 seconds corresponding to a hold time from when the input region is touched to when the touch is released, the control module 101 may change the hold time of the tap and hold to 4 seconds based on the gesture information about the tap and hold. Further, when a gesture, in which the touch is maintained for 4 seconds, is input by the user, the control module 101 may determine that the tap and hold is input.

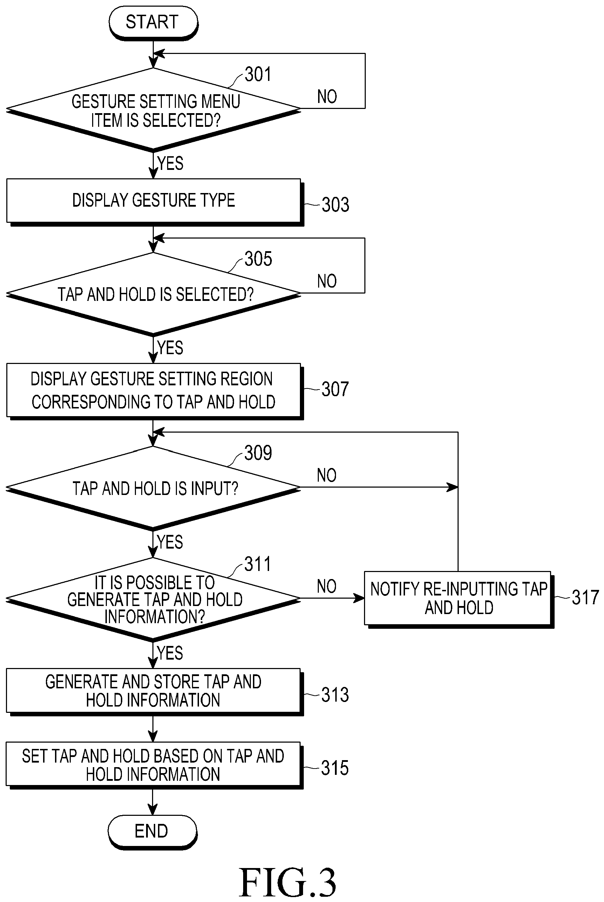

FIG. 3 illustrates a process of setting a gesture according to various example embodiments.

Referring to FIG. 3, in operation 301, the control module 101 may display a gesture setting menu and confirm whether a gesture setting menu item is selected by a user. Here, the gesture setting menu refers to a menu for setting a gesture.

When the gesture setting menu item is selected, the control module 101 may proceed to operation 303, but otherwise, the control module 101 may repeatedly perform operation 301.

When the control module 101 proceeds to operation 303, the control module 101 may display a gesture type menu, and then proceed to operation 305. Here, the gesture type menu refers to a menu including the types of gesture recognizable by the electronic device. For example, the gesture type menu may include at least one of a tap and hold, a double tap, a flick, a zoom gesture, and a rotation gesture.

Further, the control module 101 may confirm whether the tap and hold menu item is selected in the displayed gesture type menu in operation 305. When the tap and hold menu item is selected, the control module 101 may proceed to operation 307, but otherwise, the control module 101 may repeatedly perform operation 305.

When the control module 101 proceeds to operation 307, the control module 101 may display a gesture setting region corresponding to the tap and hold menu item, and then proceed to operation 309. For example, when the selected specific gesture menu item is the tap and hold, the control module 101 may display a gesture setting region 807 including an input region for receiving an input of the tap and hold from the user like the screen 805 of FIG. 8B.

Further, in operation 309, the control module 101 may confirm whether the tap and hold is input into the input region of the gesture setting region by the user. For example, the control module 101 may confirm whether the tap and hold is input into the input region 811 like a screen 809 of FIG. 8C.

When the tap and hold is selected, the control module 101 may proceed to operation 311, but otherwise, the control module 101 may repeatedly perform operation 309.

When the control module 101 proceeds to operation 311, the control module 101 may confirm whether it is possible to generate tap and hold information, which is the gesture information corresponding to the tap and hold, based on a parameter (for example, a touch time or a touch release time) for the input tap and hold. Here, the tap and hold information is the gesture information corresponding to the tap and hold, and may include a time from when the input region is touched to when the touch is released.

When it is possible to generate the tap and hold information, the control module 101 may proceed to operation 313, but otherwise, the control module 101 may repeatedly perform operation 317.

When the control module 101 proceeds to operation 317, the control module 101 may output a notice message demanding re-inputting the tap and hold, and then repeatedly perform operation 309. For example, the control module 101 may generate and display a pop-up window requesting re-inputting the tap and hold like the screen 823 of FIG. 8F. For another example, the control module 101 may output a voice message requesting re-inputting the tap and hold.

When the control module 101 proceeds to operation 313, the control module 101 may generate the tap and hold information, which is the gesture information, store the generated tap and hold information in the memory module 107, and then proceed to operation 315.

Further, in operation 315, the control module 101 may set a recognition reference of the tap and hold for the electronic device based on the tap and hold information. In this embodiment, the control module 101 may set the recognition reference of the tap and hold so as to be customized to the input sign of the user by changing a setting value of the tap and hold included in the frame work of the electronic device based on the tap and hold information.

For example, when the selected specific gesture menu item is the tap and hold, and the gesture information includes 4 seconds corresponding to a hold time from when the input region is touched to when the touch is released, the control module 101 may change the hold time of the tap and hold to 4 seconds based on the tap and hold information. Then, when a gesture, in which the touch is maintained for 4 seconds, is input by the user, the control module 101 may determine that the tap and hold is input.

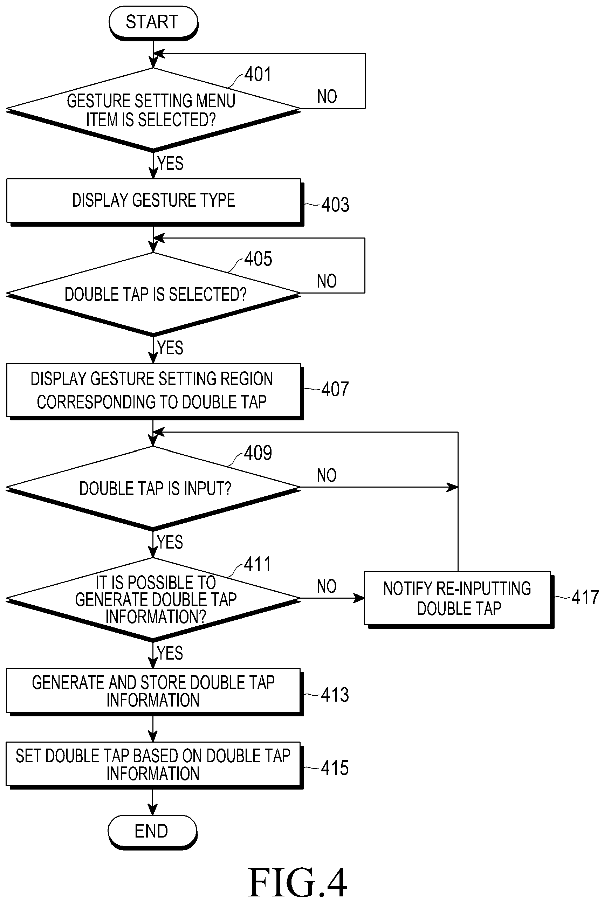

FIG. 4 illustrates a process of setting a gesture according to various example embodiments.

Referring to FIG. 4, in operation 401, the control module 101 may display a gesture setting menu and confirm whether a gesture setting menu item is selected by a user. Here, the gesture setting menu refers to a menu for setting a gesture.

When the gesture setting menu item is selected, the control module 101 may proceed to operation 403, but otherwise, the control module 101 may repeatedly perform operation 401.

When the control module 101 proceeds to operation 403, the control module 101 may display a gesture type menu, and then proceed to operation 405. Here, the gesture type menu refers to a menu including the types of gesture recognizable by the electronic device. For example, the gesture type menu may include at least one of a tap and hold, a double tap, a flick, a zoom gesture, and a rotation gesture.

Further, the control module 101 may confirm whether a double tap menu item is selected in the displayed gesture type menu in operation 405. When the double tap menu item is selected, the control module 101 may proceed to operation 407, but otherwise, the control module 101 may repeatedly perform operation 405.

When the control module 101 proceeds to operation 407, the control module 101 may display a gesture setting region corresponding to the double tap menu item, and then proceed to operation 409. For example, when the selected specific gesture menu item is the double tap, the control module 101 may display a gesture setting region 907 including an input region for receiving an input of the double tap from the user like the screen 905 of FIG. 9B.

Further, in operation 409, the control module 101 may confirm whether the double tap is input into the input region of the gesture setting region by the user. For example, the control module 101 may confirm whether the gesture is input into the input region 911 like the screen 909 of FIG. 9C.

When the double tap is input, the control module 101 may proceed to operation 411, but otherwise, the control module 101 may repeatedly perform operation 409.

When the control module 101 proceeds to operation 411, the control module 101 may confirm whether it is possible to generate double tap information, which is the gesture information corresponding to the double tap, based on a parameter (for example, a touch time or a touch release time) for the input double tap. For another example, the double tap information is the gesture information corresponding to the double tap, and may include a time from when the input region is first touched to when the touch is released, a time from when the input region is second touched to when the touch is released, and a time from when a touch of the input region is first released to when the input region is second touched.

When it is possible to generate the double tap information, the control module 101 may proceed to operation 413, but otherwise, the control module 101 may proceed to operation 417.

When the control module 101 proceeds to operation 417, the control module 101 may output a notice message demanding re-inputting the double tap, and then repeatedly perform operation 409. For example, the control module 101 may generate and display a pop-up window requesting re-inputting the double tap like the screen 923 of FIG. 9F. For another example, the control module 101 may output a voice message requesting re-inputting the double tap.

When the control module 101 proceeds to operation 413, the control module 101 may generate the double tap information, store the generated double tap information in the memory module 107, and then proceed to operation 415.

Further, in operation 415, the control module 101 may set a recognition reference of the double tap for the electronic device based on the double tap information. In this embodiment, the control module 101 may set the recognition reference of the double tap so as to be customized to the input sign of the user by changing a setting value of the double tap included in the framework of the electronic device based on the double tap information.

For example, when the selected specific gesture menu item is the double tap, and the double tap information includes a time of 2 seconds from when the input region is first touched to when the touch is released, a time of 2 seconds from when the input region is second touched to when the touch is released, and a time of 3 seconds from when the touch of the input region is first released to when the input region is second touched, the control module 101 may change a double tap touch interval to 3 seconds based on the double tap information. Then, when a gesture, in which an input time difference between a plurality of taps is 3 seconds, is input, the control module 101 may determine that the double tap is input.

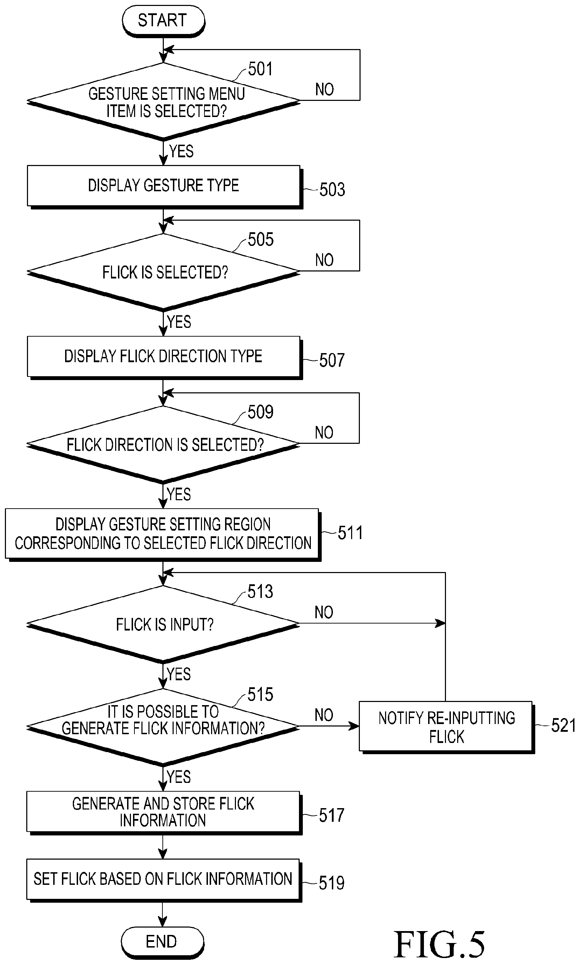

FIG. 5 illustrates a process of setting a gesture according to various example embodiments.

Referring to FIG. 5, in operation 501, the control module 101 may display a gesture setting menu and confirm whether a gesture setting menu item is selected by a user. Here, the gesture setting menu refers to a menu for setting a gesture.

When the gesture setting menu item is selected, the control module 101 may proceed to operation 503, but otherwise, the control module 101 may repeatedly perform operation 501.

When the control module 101 proceeds to operation 503, the control module 101 may display a gesture type menu, and then proceed to operation 505. Here, the gesture type menu refers to a menu including the types of gesture recognizable by the electronic device. For example, the gesture type menu may include at least one of a tap and hold, a double tap, a flick, a zoom gesture, and a rotation gesture.

Further, the control module 101 may confirm whether a flick menu item is selected in the displayed gesture type menu in operation 505. When the flick menu item is selected, the control module 101 may proceed to operation 507, but otherwise, the control module 101 may repeatedly perform operation 505.

When the control module 101 proceeds to operation 507, the control module 101 may display a flick direction type menu, and then proceed to operation 509. Here, a flick direction type menu is a menu showing directions of the flick, and may include, for example, a right directional flick, a left directional flick, a down directional flick, and an up directional flick. For example, the control module 101 may display the flick direction type menu like the screen 1001 of FIG. 10A.

Further, in operation 509, the control module 101 may confirm whether a specific flick direction is selected in the displayed flick direction type menu by the user. When the specific flick direction is selected, the control module 101 may proceed to operation 511, but otherwise, the control module 101 may repeatedly perform operation 509.

When the control module 101 proceeds to operation 511, the control module 101 may display a gesture setting region corresponding to the selected flick direction, and then proceed to operation 513. For example, when the direction of the selected flick is the right direction, the control module 101 may display a gesture setting region 1011 including an input region for receiving an input of the right directional flick from the user like the screen 1009 of FIG. 10C.

Further, in operation 513, the control module 101 may confirm whether the flick is input into the input region of the gesture setting region by the user. For example, the control module 101 may confirm whether the gesture is input into the input region 1015 like the screen 1013 of FIG. 10D.

When the flick is input, the control module 101 may proceed to operation 515, but otherwise, the control module 101 may repeatedly perform operation 513.

When the control module 101 proceeds to operation 515, the control module 101 may confirm whether it is possible to generate flick information, which is the gesture information corresponding to the flick, based on a parameter for the input flick (for example, a touch performance direction, a moving distance of the touch, or a touch time). Here, the flick information is the gesture information corresponding to the flick, and may include a time from when the input region is touched to when the touch is released, a moving distance from the touch of the input region to the release of the touch, and the direction of the flick.

When it is possible to generate the flick information, the control module 101 may proceed to operation 517, but otherwise, the control module 101 may proceed to operation 521.

When the control module 101 proceeds to operation 521, the control module 101 may output a notice message demanding re-inputting the flick tap, and then repeatedly perform operation 513. For example, the control module 101 may generate and display a pop-up window 1029 requesting re-inputting the flick like the screen 1027 of FIG. 10G. For another example, the control module 101 may output a voice message requesting re-inputting the flick.

When the control module 101 proceeds to operation 517, the control module 101 may generate the flick information, store the generated flick information in the memory module 107, and then proceed to operation 519.

Further, in operation 519, the control module 101 may set a recognition reference of the flick for the electronic device based on the flick information. In this embodiment, the control module 101 may set the recognition reference of the flick so as to be customized to the input sign of the user by changing a setting value of the flick included in the frame work of the electronic device based on the flick information.

For example, when the selected specific gesture menu item is the flick, and the flick information includes a time of 3 seconds from when the input region is touched to when the touch is released, a moving distance of 1 cm from where the input region is touched to where the touch is released, and the right direction that is the flick direction, the control module 101 may change the moving distance of the flick to 1 cm based on the flick information. Then, when a gesture, in which a touch direction is the right direction and a touch moving distance is 1 cm, the control module 101 may determine that the right directional flick is input.

In FIG. 5, it has been described that when the flick direction is selected by the user, the control module 101 generates the flick information about the selected flick direction in operations 507 to 519, but the control module 101 may generate the flick information without user's selection of the flick direction. For example, when the flick is selected by the user in operation 505, the control module 101 may automatically display a gesture setting region corresponding to a predetermined first direction (for example, the right direction), and generate the flick information about the first direction according to a first-directional flick input by the user through a first gesture setting region. Further, the control module 101 may automatically display a second gesture setting region corresponding to a predetermined second direction (for example, the left direction), and generate the flick information about the second direction according to a second-directional flick input by the user through the gesture setting region. Through the repetition of the operation, the control module 101 may generate the flick information about at least one direction between a third direction and a fourth direction.

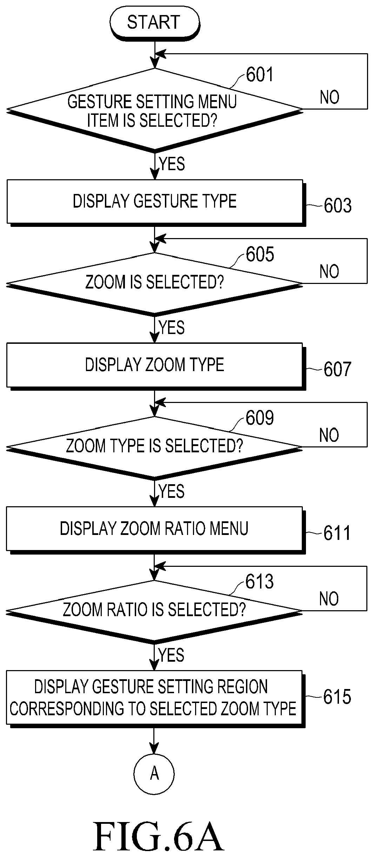

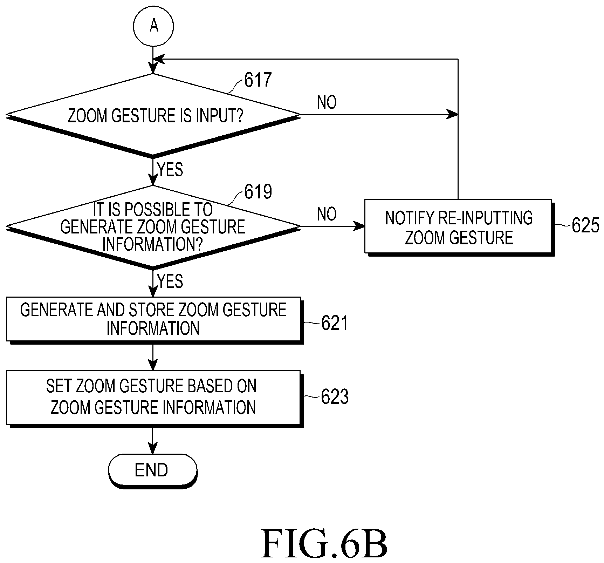

FIGS. 6A and 6B illustrate a process of setting a gesture according to various example embodiments.

Referring to FIGS. 6A and 6B, in operation 601, the control module 101 may display a gesture setting menu and confirm whether a gesture setting menu item is selected by a user. Here, the gesture setting menu refers to a menu for setting a gesture.

When the gesture setting menu item is selected, the control module 101 may proceed to operation 603, but otherwise, the control module 101 may repeatedly perform operation 601.

When the control module 101 proceeds to operation 603, the control module 101 may display a gesture type menu, and then proceed to operation 605. Here, the gesture type menu refers to a menu including the types of gesture recognizable by the electronic device. For example, the gesture type menu may include at least one of a tap and hold, a double tap, a flick, a zoom gesture, and a rotation gesture.

Further, the control module 101 may confirm whether a zoom gesture menu item is selected in the displayed gesture type menu in operation 605. When the zoom gesture menu item is selected, the control module 101 may proceed to operation 607, but otherwise, the control module 101 may repeatedly perform operation 605.

When the control module 101 proceeds to operation 607, the control module 101 may display a zoom type menu, and then proceed to operation 609. Here, the zoom type menu is a menu showing the types of zoom, and may include, for example, a zoom-in gesture and a zoom-out gesture. For example, the control module 101 may display the zoom type menu like the screen 1101 of FIG. 11A.

Further, in operation 609, the control module 101 may confirm whether a specific zoom gesture is selected in the displayed zoom type menu by the user. When the specific zoom gesture is selected, the control module 101 may proceed to operation 611, but otherwise, the control module 101 may proceed to operation 609.

When the control module 101 proceeds to operation 611, the control module 101 may display a zoom ratio menu showing a plurality of zoom ratios for the selected specific zoom gesture and then proceed to operation 613. For example, when the selected specific zoom gesture is the zoom-in gesture, the control module 101 may display a zoom ratio menu like the screen 1105 of FIG. 11B.

Further, in operation 613, the control module 101 may confirm whether a specific zoom ratio is selected in the zoom ratio menu by the user. When the specific zoom ratio is selected, the control module 101 may proceed to operation 615, but otherwise, the control module 101 may proceed to operation 613.

When the control module 101 proceeds to operation 615, the control module 101 may display a gesture setting region corresponding to the selected zoom gesture and then proceed to operation 617. For example, when the selected zoom gesture is the zoom-in gesture, the control module 101 may display a gesture setting region 1115 including an input region for receiving an input of the zoom-in gesture from the user like the screen 1113 of FIG. 11D.

Further, in operation 617, the control module 101 may confirm whether the zoom gesture is input into the input region of the gesture setting region by the user. For example, the control module 101 may confirm whether the zoom-in gesture is input into the input region 1119 like the screen 1117 of FIG. 11E.

When the zoom gesture is input, the control module 101 may proceed to operation 619, but otherwise, the control module 101 may repeatedly perform operation 617.

When the control module 101 proceeds to operation 619, the control module 101 confirms whether it is possible to generate zoom gesture information, which is the gesture information corresponding to the zoom gesture, based on a parameter for the input zoom gesture (for example, a moving distance between the plurality or touched regions). Here, the zoom gesture information is the gesture information corresponding to the zoom, and may include the zoom ratio and the moving distance between the plurality of touched regions.

When it is possible to generate the zoom gesture information, the control module 101 may proceed to operation 621, but otherwise, the control module 101 may proceed to operation 625.

When the control module 101 proceeds to operation 625, the control module 101 may output a notice message demanding re-inputting the zoom gesture, and then repeatedly perform operation 617. For example, the control module 101 may generate and display a pop-up window 1129 requesting re-inputting the zoom-in gesture like the screen 1127 of FIG. 11G. For another example, the control module 101 may output a voice message requesting re-inputting the zoom-in gesture.

When the control module 101 proceeds to operation 621, the control module 101 may generate the zoom gesture information, store the generated zoom gesture information in the memory module 107, and then proceed to operation 623.

Further, in operation 623, the control module 101 may set a recognition reference of the zoom gesture for the electronic device based on the zoom gesture information. In this embodiment, the control module 101 may set the recognition reference of the zoom gesture so as to be customized to the input sign of the user by changing a setting value of the zoom gesture included in the frame work of the electronic device based on the zoom gesture information.

For example, when the selected specific gesture menu item is the zoom gesture, and the zoom gesture information includes the zoom ratio of 10 times, and the moving distance between the plurality of touched regions is 1 cm, the control module 101 may change the moving distance between the plurality of touched regions for the zoom-in to 1 cm based on the zoom gesture information. Then, when a gesture, in which a moving distance between the plurality of touched regions is 1 cm, is input into a specific image, the control module 101 may determine that the zoom-in gesture of enlarging the specific image by 10 times is input.

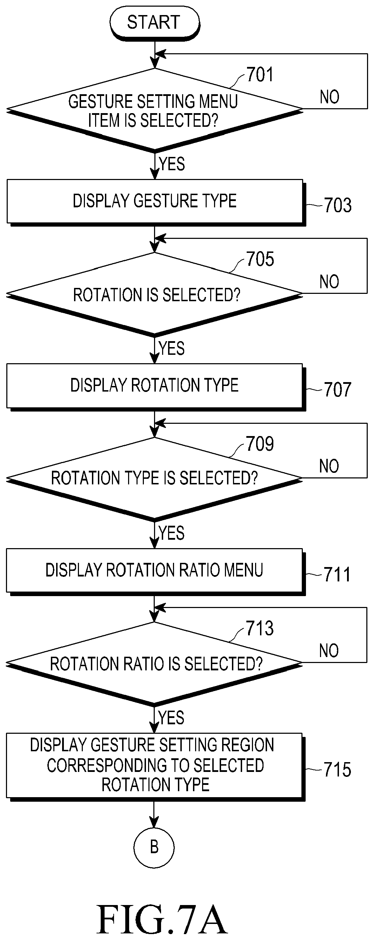

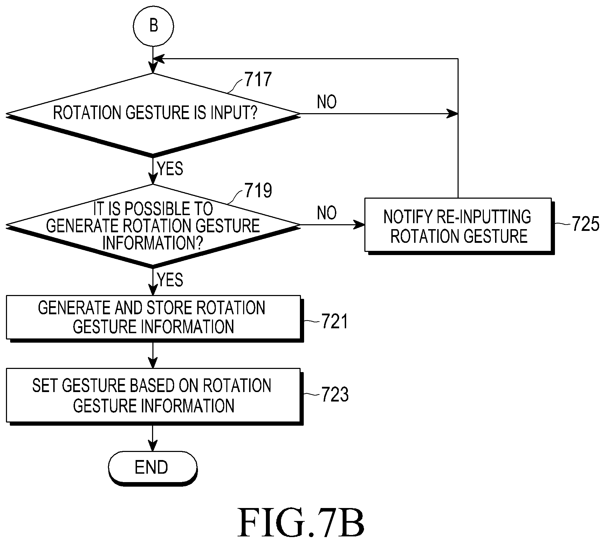

FIGS. 7A and 7B illustrate a process of setting a gesture according to various example embodiments.

Referring to FIGS. 7A and 7B, in operation 701, the control module 101 may display a gesture setting menu and confirm whether a gesture setting menu item is selected by a user. Here, the gesture setting menu refers to a menu for setting a gesture.

When the gesture setting menu item is selected, the control module 101 may proceed to operation 703, but otherwise, the control module 101 may repeatedly perform operation 701.

When the control module 101 proceeds to operation 703, the control module 101 may display a gesture type menu, and then proceed to operation 705. Here, the gesture type menu refers to a menu including the types of gesture recognizable by the electronic device. For example, the gesture type menu may include at least one of a tap and hold, a double tap, a flick, a zoom gesture, and a rotation gesture.

Further, the control module 101 may confirm whether a rotation gesture menu item is selected in the displayed gesture type menu in operation 705. When the rotation menu item is selected, the control module 101 may proceed to operation 707, but otherwise, the control module 101 may repeatedly perform operation 705.

When the control module 101 proceeds to operation 707, the control module 101 may display a rotation direction menu, and then proceed to operation 709. Here, the rotation direction menu is a menu showing the direction types of rotation, and may include, for example, a clockwise direction and a counterclockwise direction. For example, the control module 101 may display the rotation direction menu like the screen 1201 of FIG. 12A.

Further, in operation 709, the control module 101 may confirm whether a specific rotation direction is selected in the displayed rotation direction menu by the user. When the specific rotation direction is selected, the control module 101 may proceed to operation 711, but otherwise, the control module 101 may repeatedly perform operation 709.

When the control module 101 proceeds to operation 711, the control module 101 may display a rotation ratio menu showing a plurality of rotation ratios for the selected specific rotation direction and then proceed to operation 713. For example, when the selected specific rotation direction is the clockwise direction, the control module 101 may display a rotation ratio menu like the screen 1205 of FIG. 12B.

Further, in operation 713, the control module 101 may confirm whether a specific rotation ratio is selected in the rotation ratio menu by the user. When the specific rotation ratio is selected, the control module 101 may proceed to operation 715, but otherwise, the control module 101 may proceed to operation 713.

When the control module 101 proceeds to operation 715, the control module 101 may display a gesture setting region corresponding to the selected rotation direction, and then proceed to operation 717. For example, when the direction of the selected rotation is the clockwise direction, the control module 101 may display a gesture setting region 1215 including an input region for receiving an input of the clockwise rotation gesture from the user like the screen 1213 of FIG. 12D.

Further, in operation 717, the control module 101 may confirm whether the rotation gesture is input into the input region of the gesture setting region by the user. For example, the control module 101 may confirm whether the clockwise rotation gesture is input into the input region 1219 like the screen 1217 of FIG. 12E.

When the rotation gesture is input, the control module 101 may proceed to operation 719, but otherwise, the control module 101 may repeatedly perform operation 717.

When the control module 101 proceeds to operation 719, the control module 101 may confirm whether it is possible to generate rotation gesture information, which is the gesture information corresponding to the rotation gesture, based on a parameter for the input rotation gesture (for example, a rotation angle of a touched region). Here, the rotation gesture information is the gesture information corresponding to the rotation, and may include a rotation ratio and a rotation angle of the touched region.

When it is possible to generate the rotation gesture information, the control module 101 may proceed to operation 721, but otherwise, the control module 101 may proceed to operation 725.

When the control module 101 proceeds to operation 725, the control module 101 may output a notice message demanding re-inputting the rotation gesture, and then repeatedly perform operation 717. For example, the control module 101 may generate and display a pop-up window 1229 requesting re-inputting the clockwise rotation gesture like a screen 1227 of FIG. 12G. For another example, the control module 101 may output a voice message requesting re-inputting the rotation gesture.

When the control module 101 proceeds to operation 721, the control module 101 may generate the rotation gesture information, store the generated rotation gesture information in the memory module 107, and then proceed to operation 723.

Further, in operation 723, the control module 101 may set a recognition reference of the zoom gesture for the electronic device based on the rotation gesture information. In this embodiment, the control module 101 may set the recognition reference of the rotation gesture so as to be customized to the input sign of the user by changing a setting value of the rotation gesture included in the frame work of the electronic device based on the rotation gesture information.

For example, when the selected specific gesture menu item is the rotation gesture and the rotation gesture information includes 10 times that is the rotation ratio and 10° that is the rotation angle of the touched region, the control module 101 may change the rotation angle of the touched region for the rotation to 10° based on the rotation gesture information. Then, when a gesture, in which a rotation angle of a touched region is 10°, is input on a specific image, the control module 101 may determine that the rotation gesture for rotating the specific image by 100° (10° × 10 times) is input.

FIGs. 8A to 8F illustrate screens in which a gesture is set according to various embodiments.

Referring to FIGS. 8A to 8F, when the tap and hold menu item is selected in the gesture type menu by the user, the control module 101 may display a delay setting menu including a plurality of delay times for setting a tap and hold delay time like a screen 801. For example, the delay setting menu may include a short section delay menu item (0.5 second), a medium section delay menu item (1 second), a long section delay menu item (1.5 seconds), and a user setting menu item 803. Here, the user setting refers to a menu item for setting a delay time of the tap and hold based on the tap and hold input by the user.

Further, when the user setting menu item 803 is selected in the delay setting menu, the control module 101 may display the gesture setting region 807 including the input region for receiving the input of the tap and hold from the user like the screen 805. In this embodiment, the control module 101 may display the input region at a center portion of the gesture setting region 807.

Further, the control module 101 may confirm whether the tap and hold is input into the input region 811 of the gesture setting region like the screen 809. In this embodiment, when the touch of the gesture is not started within the displayed input region, the control module 101 may detect a touch position of the gesture and display the input region 815 at the detected touch position like a screen 813.

Further, the control module 101 confirms whether it is possible to generate the tap and hold information based on the parameter of the input tap and hold. When it is possible to generate the tap and hold information, the control module 101 may change a color of the input region 819 for showing that it is possible to generate the tap and hold information, and activate a storage menu item 821 of the tap and hold information like a screen 817.

When it may be unable to generate the tap and hold information, the control module 101 may display a pop-up window 825 demanding re-inputting the tap and hold on the gesture setting region like the screen 823.

FIGS. 9A to 9F illustrate screens in which a gesture is set according to various embodiments.

Referring to FIGS. 9A to 9F, when the double tap menu item is selected in the gesture type menu by the user, the control module 101 may display a delay setting menu including a plurality of delay times for setting a double tap delay time like a screen 901. For example, the delay setting menu may include a short section delay menu item (0.5 second), a medium section delay menu item (1 second), a long section delay menu item (1.5 seconds), and a user setting menu item 903. Here, the user setting refers to a menu for setting a delay time of the double tap based on the double tap input by the user.

Further, when the user setting menu item 903 is selected in the delay setting menu, the control module 101 may display the gesture setting region 907 including the input region for receiving the input of the tap and hold from the user like the screen 905. In this embodiment, the control module 101 may display the input region at a center portion of the gesture setting region 907.

Further, the control module 101 may confirm whether the double tap is input into the input region 911 of the gesture setting region like the screen 909. In this embodiment, when the touch of the gesture is not started within the displayed input region, the control module 101 may detect a touch position of the gesture and display the input region 913 at the detected touch position like a screen 915.

Further, the control module 101 confirms whether it is possible to generate the double tap information based on the parameter of the input double tap. When it is possible to generate the double tap information, the control module 101 may change a color of the input region 919 for showing that it is possible to generate the tap and hold information, and activate a storage menu item 921 of the double tap information.

When it may be unable to generate the double tap information, the control module 101 may display a pop-up window 925 demanding re-inputting the double tap on the gesture setting region like the screen 923.

FIGs. 10A to 10I illustrate screens in which a gesture is set according to various embodiments.

Referring to FIGs. 10A to 10I, when the flick menu item is selected in the gesture type menu by the user, the control module 101 may display the flick direction type menu for selecting a flick direction like the screen 1001. For example, the flick direction type menu may include a right direction menu item, a left direction menu item, an up direction menu item, a down direction menu item, and an all direction menu item. Here, the all direction menu item is a menu item for setting a delay time for a representative direction among the flicks in the right direction, the left direction, the up direction, and the down direction, and reflecting the delay time for the representative direction to delay times of all of the directions.

Otherwise, when the flick menu item is selected in the gesture type menu by the user, the control module 101 may display the flick direction type menu for selecting a flick direction like the screen 1037. For example, the flick direction type menu may include the right direction menu item, the left direction menu item, the up direction menu item, and the down direction menu item, and check boxes (for example, a check box 1039 for selecting the right direction menu item) for selecting a specific direction in the flick direction type menu.

Further, when the specific direction menu item is selected in the displayed flick direction menu by the user, the control module 101 may display the delay setting menu for setting a delay time for the flick in the specific direction like a screen 1005. For example, when the right direction menu item 1003 is selected in the displayed flick direction menu, the control module 101 may display the delay setting menu for setting a delay time for the flick in the right direction like the screen 1005. For example, the delay setting menu may include a short section delay menu item (0.5 second), a medium section delay menu item (1 second), a long section delay menu item (1.5 seconds), and a user setting menu item 903. Here, the user setting refers to a menu for setting a delay time of the flick based on the flick input by the user. For another example, when the all direction menu item is selected in the displayed flick direction menu, the control module 101 may display the delay setting menu for setting the delay for the flick in the representative direction (For example, the right direction) among all of the directions like the screen 1005. Further, when the user setting menu item 1007 is selected in the delay setting menu, the control module 101 may display the gesture setting region 1011 including the input region for receiving the input of the flick from the user like the screen 1009. In this embodiment, the control module 101 may display the input region at a center portion of the gesture setting region 1011.

Further, the control module 101 may confirm whether the flick is input into the input region 1015 of the gesture setting region like the screen 1013. In this embodiment, when the touch of the gesture is not started within the displayed input region, the control module 101 may detect a touch position of the gesture and display the input region 1017 at the detected touch position like a screen 1019.

Further, the control module 101 confirms whether it is possible to generate the flick information based on the parameter of the input flick. When it may be unable to generate the flick information, the control module 101 may display a pop-up window 1029 demanding re-inputting the flick on the gesture setting region like the screen 1027.

When it is possible to generate the flick information, the control module 101 may change a color of the input region 1023 for showing that it is possible to generate the flick information, and activate a storage menu item 1025 of the flick information like a screen 1021.

Further, when the right direction menu item, the left direction menu item, the up direction menu item, or the down direction menu item is selected in the flick direction type menu, and then the storage menu 1033 requesting storing the information about the flick in the corresponding direction is selected by the user like a screen 1031, the control module 101 may display a pop-up window 1035 inquiring whether to apply the information about the flick in the corresponding direction as information of the flick in other directions. Further, when "yes" is selected by the user, the control module 101 may apply the information about the flick in the corresponding direction as the information of the flick in other directions. However, when "no" is selected by the user, the control module 101 may not apply the information about the flick in the corresponding direction as the information of the flick in other directions.

Otherwise, when the all direction menu item is selected in the flick direction type menu, and then the storage menu 1033 requesting storing the information about the flick in the corresponding direction is selected by the user like the screen 1031, the control module 101 may apply the information about the flick in the corresponding direction as the information of the flick in other directions.

FIGs. 11A to 11G illustrate screens in which a gesture is set according to various embodiments.

Referring to FIGs. 11A to 11G, when the zoom gesture menu item is selected in the gesture type menu by the user, the control module 101 may display the zoom type menu for selecting the type of the zoom gesture like the screen 1101. For example, the zoom type menu may include a zoom in menu item and a zoom-out menu item.

Further, when a specific zoom menu item is selected in the displayed zoom type menu by the user, the control module 101 may display the zoom ratio setting menu for setting a ratio of the specific zoom menu item like a screen 1105. For example, when the zoom-in menu item 1103 is selected in the displayed zoom type menu, the control module 101 may display the zoom ratio setting menu for setting a zoom ratio for the zoom-in gesture like the screen 1105. For example, the zoom ratio setting menu may include a low ratio menu item (one time), a medium ratio menu item (5 times), a high ratio menu item (10 times), and a user setting menu item. Here, the user setting menu item refers to a menu item for setting a zoom ratio with a number input by the user.

Further, when a zoom ratio corresponding to the specific zoom gesture is set by using the zoom ratio menu, the control module 101 may display a moving distance setting menu for setting a moving distance between the plurality of touched regions of the specific zoom gesture like a screen 1109. For example, the moving distance setting menu may include a short section moving menu item (0.5 cm), a medium section moving menu item (1 cm), a long section moving menu item (1.5 cm), and a user setting menu item. Here, the user setting menu item refers to a menu item for setting a moving distance between the touched regions of the specific zoom gesture based on the specific zoom gesture input by the user.

Further, when the user setting menu item 1111 is selected in the moving distance setting menu, the control module 101 may display the gesture setting region 1115 including the input region for receiving the input of the specific zoom gesture from the user like the screen 1113. In this embodiment, the control module 101 may display the input region at a center portion of the gesture setting region 1115.

Further, when the specific zoom gesture is input into the input region 1119 of the gesture setting region like the screen 1117, the control module 101 confirms whether it is possible to generate the zoom gesture information based on the parameter of the input zoom gesture. When it is possible to generate the zoom gesture information, the control module 101 may change a color of the input region 1123 for showing that it is possible to generate the zoom gesture information, and activate a storage menu item 1125 of the zoom gesture information like the screen 1121.

When it may be unable to generate the zoom gesture information, the control module 101 may display a pop-up window 1129 demanding re-inputting the specific zoom gesture on the gesture setting region like the screen 1127.

FIGs. 12A to 12G illustrate screens in which a gesture is set according to various embodiments.

Referring to FIGs. 12A to 12G, when the rotation gesture menu item is selected in the gesture type menu by the user, the control module 101 may display the rotation type menu for selecting a rotation direction of the rotation gesture like the screen 1201. For example, the rotation type menu may include a clockwise direction rotation menu item and a counterclockwise direction rotation menu item.

Further, when a specific rotation menu item is selected in the displayed rotation type menu by the user, the control module 101 may display the rotation ratio setting menu for setting a ratio of the specific rotation menu item like the screen 1205. For example, when the clockwise rotation menu item 1203 is selected in the displayed rotation type menu, the control module 101 may display the rotation ratio setting menu for setting a rotation ratio for the clockwise rotation gesture like the screen 1205. For example, the rotation ratio setting menu may include a low ratio menu item (one time), a medium ratio menu item (5 times), a high ratio menu item (10 times), and a user setting menu item. Here, the user setting menu item refers to a menu item for setting a rotation ratio with a number input by the user.

Further, when a rotation ratio corresponding to the specific rotation gesture is set by using the rotation ratio menu, the control module 101 may display a rotation angle setting menu for setting a rotation angle of the touched region for the specific rotation gesture like a screen 1209. For example, the rotation ratio setting menu may include a small angle menu item (5°), a medium angle menu item (10°), a large angle menu item (15°), and a user setting menu item. Here, the user setting menu item refers to a menu item for setting a rotation angle of the touched region for the specific rotation gesture based on the specific rotation gesture input by the user.

Further, when the user setting menu item 1211 is selected in the rotation angle setting menu, the control module 101 may display the gesture setting region 1215 including the input region for receiving the input of the specific rotation gesture from the user like the screen 1213. In this embodiment, the control module 101 may display the input region at a center portion of the gesture setting region 1215.

Further, when the specific rotation gesture is input into the input region 1219 of the gesture setting region like the screen 1217, the control module 101 confirms whether it is possible to generate the rotation gesture information based on the parameter of the input rotation gesture. When it is possible to generate the zoom gesture information, the control module 101 may change a color of the input region 1223 for showing that it is possible to generate the rotation gesture information, and activate a storage menu item 1225 of the rotation gesture information like the screen 1221.

When it may be unable to generate the rotation gesture information, the control module 101 may display a pop-up window 1229 demanding re-inputting the specific rotation gesture on the gesture setting region like the screen 1227.

According to the various example embodiments of the present disclosure, in the electronic device, a gesture is set by reflecting a unique touch sign of a user, thereby providing the user with touch convenience.

The apparatus and the method of setting the gesture in the electronic device according to the various embodiments of the present disclosure may be implemented by computer readable codes in a computer readable recording medium. The computer-readable recording medium includes all the types of recording devices in which data readable by a computer system are stored. As for such a recording medium, for example, a ROM, a RAM, an optical disc, a magnetic tape, a floppy disc, a hard disc, or a non-volatile memory may be used, and a medium implemented in a type of carrier wave (for example, transmission through the Internet) may also be included in such a recording medium. In addition, the computer-readable recording medium may be stored with codes which are distributed in computer systems connected by a network such that the codes can be read and executed by a computer in a distributed method.

As described above, according to the various example embodiments of the present disclosure, in the electronic device, a gesture is set by reflecting a unique touch sign of a user, thereby providing the user with touch convenience.

In the descriptions of the various example embodiments of the present disclosure, the particular example embodiments, like the electronic device, have been described, but various modifications may be carried out without departing from the scope of the present disclosure.

In the meantime, in the various example embodiments of the present disclosure, the setting of the gesture input by using the touch function of the electronic device has been described, but the present disclosure is not limited thereto, and a gesture input by using another function may also be set. For example, according to the various example embodiments of the present disclosure, a gesture input by using a hovering function (a proximity touch function), as well as a gesture input by using a touch function, may be set.

Although the present disclosure has been described with an example embodiment, various changes and modifications may be suggested to one skilled in the art.

## Claims

1. An apparatus for setting a gesture in an electronic device, comprising:
a memory module (107) arranged to store information about a gesture; and
a control module (101) arranged to:
display (207) a gesture setting region (807) for receiving an input of a gesture when the gesture is selected among a plurality of gestures, including an input region (811) corresponding to the selected gesture;
confirm (311, 411, 515, 619, 719) whether it is possible to generate gesture information about the gesture when the gesture is input into the input region;
change a color of the input region and store (211) the generated gesture information in the memory module (107) when it is possible to generate the gesture information about the gesture; and
set (213) a recognition reference of the gesture based on the gesture information,
wherein the input region (811) is smaller than the gesture setting region (807).

2. The apparatus of claim 1, wherein the control module is arranged to determine whether the selected gesture is input based on the recognition reference.

3. The apparatus of claim 1, wherein the control module is arranged to:
confirm (311, 411, 515, 619, 719) whether it is possible to generate the gesture information based on a parameter of the input gesture and
output (317, 417, 521, 625, 725) a message requesting re-inputting the gesture when it is impossible to generate the gesture information.

4. The apparatus of claim 1, wherein when the selected gesture is a tap and hold, the control module is arranged to generate the gesture information including a time from a touch to a release of the touch for the tap and hold.

5. The apparatus of claim 1, wherein when the selected gesture is a double tap, the control module is arranged to generate the gesture information including a time from a touch to a release of the touch for a first tap for the double tap, a time from a touch to a release of the touch for a second tap, and a time from release of the touch of the first tap to a touch of the second tap.

6. The apparatus of claim 1, wherein when the selected gesture is a flick, the control module is arranged to generate the gesture information including a time from a touch to a release of the touch for the flick, a moving distance, and a direction.

7. The apparatus of claim 1, wherein when the selected gesture is a zoom gesture, the control module is arranged to generate the gesture information including a zoom ratio for the zoom gesture and a moving distance between a plurality of touched regions.

8. The apparatus of claim 1, wherein when the selected gesture is a rotation gesture, the control module is arranged to generate the gesture information including a rotation ratio for the rotation gesture and a rotation angle of a touched region.

9. A method of setting a gesture in an electronic device, comprising:
when a gesture is selected among a plurality of gestures gestures,
displaying (207) a gesture setting region (807) for receiving an input of the gesture, including an input region (811) corresponding to the selected gesture;
confirming (311, 411, 515, 619, 719) whether it is possible to generate gesture information about the gesture when the gesture is input into the input region;
changing a color of the input region and store the generated gesture information in the memory module (107) when it is possible to generate the gesture information about the gesture; and
setting (213) a recognition reference of the gesture based on the gesture information,
wherein the input region (811) is smaller than the gesture setting region (807).

10. The method of claim 9, further comprising:
determining whether the selected gesture is input based on the recognition reference.

11. The method of claim 9, wherein the confirming (311, 411, 515, 619, 719) whether it is possible to generate the gesture information includes: confirming (311, 411, 515, 619, 719) whether it is possible to generate the gesture information based on a parameter of the input gesture and outputting (317, 417, 521, 625, 725) a message requesting re-inputting the gesture when it is impossible to generate the gesture information.

12. The method of claim 9, wherein when the selected gesture is a tap and hold, the gesture information includes a time from a touch to a release of the touch for the tap and hold.

13. The method of claim 9, wherein when the selected gesture is a double tap, the gesture information includes a time from a touch to a release of the touch for a first tap for the double tap, a time from a touch to a release of the touch for a second tap, and a time from release of the touch of the first tap to a touch of the second tap.

14. The method of claim 9, wherein when the selected gesture is a flick, the gesture information includes a time from a touch to a release of the touch for the flick, a moving distance, and a direction.

15. The method of claim 9, wherein when the selected gesture is a zoom gesture, the gesture information includes a zoom ratio for the zoom gesture and a moving distance between a plurality of touched regions.

16. The method of claim 9, wherein when the selected gesture is a rotation gesture, the gesture information includes a rotation ratio for the rotation gesture and a rotation angle of a touched region.

## Patentansprüche

1. Vorrichtung zum Einstellen einer Geste in einem elektronischen Gerät, die Folgendes umfasst:
ein Speichermodul (107), das ausgelegt ist, Informationen über eine Geste zu speichern; und
ein Steuermodul (101), das ausgelegt ist,
einen Gesteneinstellbereich (807) zum Empfangen einer Eingabe einer Geste anzuzeigen (207), wenn die Geste unter mehreren Gesten ausgewählt worden ist, der einen Eingabebereich (811) beinhaltet, der der ausgewählten Geste entspricht;
zu bestätigen (311, 411, 515, 619, 719), ob es möglich ist, Gesteninformationen über die Geste zu erzeugen, wenn die Geste in den Eingabebereich eingegeben worden ist;
eine Farbe des Eingabebereiches zu ändern und die erzeugten Gesteninformationen im Speichermodul (107) zu speichern (211), wenn es möglich ist, die Gesteninformationen über die Geste zu erzeugen; und
eine Erkennungsreferenz der Geste basierend auf den Gesteninformationen einzustellen (213),
wobei der Eingabebereich (811) kleiner als der Gesteneinstellbereich (807) ist.

2. Vorrichtung nach Anspruch 1, wobei das Steuermodul ausgelegt ist, basierend auf der Erkennungsreferenz zu ermitteln, ob die ausgewählte Geste eingegeben worden ist.

3. Vorrichtung nach Anspruch 1, wobei das Steuermodul ausgelegt ist,
basierend auf einem Parameter der Eingabegeste zu bestätigen (311, 411, 515, 619, 719), ob es möglich ist, die Gesteninformationen zu erzeugen, und
eine Mitteilung auszugeben (317, 417, 521, 625, 725), die ein Neueingeben der Geste fordert, wenn es unmöglich ist, die Gesteninformationen zu erzeugen.

4. Vorrichtung nach Anspruch 1, wobei, wenn die ausgewählte Geste ein Tippen und Halten ist, das Steuermodul ausgelegt ist, die Gesteninformationen zu erzeugen, wobei sie eine Zeit von einer Berührung bis zu einer Freigabe der Berührung für das Tippen und Halten beinhalten.

5. Vorrichtung nach Anspruch 1, wobei, wenn die ausgewählte Geste ein Doppeltippen ist, das Steuermodul ausgelegt ist, die Gesteninformationen zu erzeugen, wobei sie eine Zeit von einer Berührung bis zu einer Freigabe der Berührung für ein erstes Tippen für das Doppeltippen, eine Zeit von einer Berührung bis zu einer Freigabe der Berührung für ein zweites Tippen und eine Zeit von Freigabe der Berührung des ersten Tippens bis zu einer Berührung des zweiten Tippens beinhalten.

6. Vorrichtung nach Anspruch 1, wobei, wenn die ausgewählte Geste ein Wischen ist, das Steuermodul ausgelegt ist, die Gesteninformationen zu erzeugen, wobei sie eine Zeit von einer Berührung bis zu einer Freigabe der Berührung für das Wischen, eine Bewegungsentfernung und eine Richtung beinhalten.

7. Vorrichtung nach Anspruch 1, wobei, wenn die ausgewählte Geste eine Größenänderungsgeste ist, das Steuermodul ausgelegt ist, die Gesteninformationen zu erzeugen, wobei sie ein Größenänderungsverhältnis für die Größenänderungsgeste und eine Bewegungsentfernung zwischen mehreren berührten Bereichen beinhalten.

8. Vorrichtung nach Anspruch 1, wobei, wenn die ausgewählte Geste eine Drehgeste ist, das Steuermodul ausgelegt ist, die Gesteninformationen zu erzeugen, wobei sie ein Drehverhältnis für die Drehgeste und einen Drehwinkel eines berührten Bereiches beinhalten.

9. Verfahren des Einstellens einer Geste in einem elektronischen Gerät, das Folgendes umfasst:
wenn eine Geste unter mehreren Gesten ausgewählt wird,
Anzeigen (207) eines Gesteneinstellbereiches (807) zum Empfangen einer Eingabe der Geste, der einen Eingabebereich (811) beinhaltet, der der ausgewählten Geste entspricht;
Bestätigen (311, 411, 515, 619, 719), ob es möglich ist, Gesteninformationen über die Geste zu erzeugen, wenn die Geste in den Eingabebereich eingegeben worden ist;
Ändern einer Farbe der Eingabebereiches und Speichern der erzeugten Gesteninformationen im Speichermodul (107), wenn es möglich ist, die Gesteninformationen über die Geste zu erzeugen; und
Einstellen (213) einer Erkennungsreferenz der Geste basierend auf den Gesteninformationen,
wobei der Eingabebereich (811) kleiner als der Gesteneinstellbereich (807) ist.

10. Verfahren nach Anspruch 9, das ferner Folgendes umfasst:
Ermitteln basierend auf der Erkennungsreferenz, ob die ausgewählte Geste eingegeben worden ist.

11. Verfahren nach Anspruch 9, wobei das Bestätigen (311, 411, 515, 619, 719), ob es möglich ist, die Gesteninformationen zu erzeugen, Bestätigen (311, 411, 515, 619, 719) basierend auf einem Parameter der Eingabegeste beinhaltet, ob es möglich ist, die Gesteninformationen zu erzeugen, und
Ausgeben (317, 417, 521, 625, 725) einer Mitteilung, die ein Neueingeben der Geste fordert, wenn es unmöglich ist, die Gesteninformationen zu erzeugen.

12. Verfahren nach Anspruch 9, wobei, wenn die ausgewählte Geste ein Tippen und Halten ist, die Gesteninformationen eine Zeit von einer Berührung bis zu einer Freigabe der Berührung für das Tippen und Halten beinhalten.

13. Verfahren nach Anspruch 9, wobei, wenn die ausgewählte Geste ein Doppeltippen ist, die Gesteninformationen eine Zeit von einer Berührung bis zu einer Freigabe der Berührung für ein erstes Tippen für das Doppeltippen, eine Zeit von einer Berührung bis zu einer Freigabe der Berührung für ein zweites Tippen und eine Zeit von Freigabe der Berührung des ersten Tippens bis zu einer Berührung des zweiten Tippens beinhalten.

14. Verfahren nach Anspruch 9, wobei, wenn die ausgewählte Geste ein Wischen ist, die Gesteninformationen eine Zeit von einer Berührung bis zu einer Freigabe der Berührung für das Wischen, eine Bewegungsentfernung und eine Richtung beinhalten.

15. Verfahren nach Anspruch 9, wobei, wenn die ausgewählte Geste eine Größenänderungsgeste ist, die Gesteninformationen ein Größenänderungsverhältnis für die Größenänderungsgeste und eine Bewegungsentfernung zwischen mehreren berührten Bereichen beinhalten.

16. Verfahren nach Anspruch 9, wobei, wenn die ausgewählte Geste eine Drehgeste ist, die Gesteninformationen ein Drehverhältnis für die Drehgeste und einen Drehwinkel eines berührten Bereiches beinhalten.

## Revendications

1. Appareil de réglage d'un geste dans un dispositif électronique, comprenant :
un module de mémoire (107) agencé pour mémoriser des informations relatives à un geste ; et
un module de commande (101) agencé pour effectuer :
l'affichage (207) d'une région de réglage de geste (807) pour la réception d'une entrée d'un geste lorsque le geste est sélectionné parmi une pluralité de gestes, comprenant une région d'entrée (811) correspondant au geste sélectionné ;
la confirmation (311, 411, 515, 619, 719) s'il est possible de générer des informations de geste relatives au geste lorsque le geste est entré dans la région d'entrée ;
le changement d'une couleur de la région d'entrée et la mémorisation (211) des informations de geste générées dans le module de mémoire (107) lorsqu'il est possible de générer les informations de geste relatives au geste ; et
le réglage (213) d'une référence de reconnaissance du geste sur la base des informations de geste,
dans lequel la région d'entrée (811) est plus petite que la région de réglage de geste (807).

2. Appareil selon la revendication 1, dans lequel le module de commande est agencé pour effectuer la détermination si le geste sélectionné est entré sur la base de la référence de reconnaissance.

3. Appareil selon la revendication 1, dans lequel le module de commande est agencé pour effectuer :
la confirmation (311, 411, 515, 619, 719) s'il est possible de générer les informations de geste sur la base d'un paramètre du geste d'entrée, et
la délivrance (317, 417, 521, 625, 725) d'un message demandant de recommencer l'entrée du geste lorsqu'il est impossible de générer les informations de geste.

4. Appareil selon la revendication 1, dans lequel, lorsque le geste sélectionné consiste à appuyer et à maintenir, le module de commande est agencé pour générer les informations de geste comprenant un temps depuis un toucher jusqu'à un relâchement du toucher pour le geste consistant à appuyer et maintenir.

5. Appareil selon la revendication 1, dans lequel, lorsque le geste sélectionné consiste à appuyer deux fois, le module de commande est agencé pour générer les informations de geste comprenant un temps depuis un toucher jusqu'à un relâchement du toucher pour une première action consistant à appuyer dans le geste consistant à appuyer deux fois, un temps depuis un toucher jusqu'à un relâchement du toucher pour une deuxième action consistant à appuyer, et un temps depuis un relâchement du toucher de la première action consistant à appuyer jusqu'à un toucher de la deuxième action consistant à appuyer.

6. Appareil selon la revendication 1, dans lequel, lorsque le geste sélectionné est un déplacement, le module de commande est agencé pour générer les informations de geste comprenant un temps depuis un toucher jusqu'à un relâchement du toucher pour le déplacement, une distance de mouvement et un sens.

7. Appareil selon la revendication 1, dans lequel, lorsque le geste sélectionné est un geste de zoom, le module de commande est agencé pour générer les informations de geste comprenant un taux de zoom pour le geste de zoom et une distance de mouvement entre une pluralité de régions touchées.

8. Appareil selon la revendication 1, dans lequel, lorsque le geste sélectionné est un geste de rotation, le module de commande est agencé pour générer les informations de geste comprenant un taux de rotation pour le geste de rotation et un angle de rotation d'une région touchée.

9. Procédé de réglage d'un geste dans un dispositif électronique, comprenant :
lorsqu'un geste est sélectionné parmi une pluralité de gestes,
l'affichage (207) d'une région de réglage de geste (807) pour la réception d'une entrée du geste, comprenant une région d'entrée (811) correspondant au geste sélectionné ;
la confirmation (311, 411, 515, 619, 719) s'il est possible de générer des informations de geste relatives au geste lorsque le geste est entré dans la région d'entrée ;
le changement d'une couleur de la région d'entrée et la mémorisation des informations de geste générées dans le module de mémoire (107) lorsqu'il est possible de générer les informations de geste relatives au geste ; et
le réglage (213) d'une référence de reconnaissance du geste sur la base des informations de geste,
dans lequel la région d'entrée (811) est plus petite que la région de réglage de geste (807).

10. Procédé selon la revendication 9, comprenant en outre :
la détermination si le geste sélectionné est entré sur la base de la référence de reconnaissance.

11. Procédé selon la revendication 9, dans lequel la confirmation (311, 411, 515, 619, 719) s'il est possible de générer les informations de geste comprend : la confirmation (311, 411, 515, 619, 719) s'il est possible de générer les informations de geste sur la base d'un paramètre du geste d'entrée, et
la délivrance (317, 417, 521, 625, 725) d'un message demandant de recommencer l'entrée du geste lorsqu'il est impossible de générer les informations de geste.

12. Procédé selon la revendication 9, dans lequel, lorsque le geste sélectionné consiste à appuyer et à maintenir, les informations de geste comprennent un temps depuis un toucher jusqu'à un relâchement du toucher pour le geste consistant à appuyer et maintenir.

13. Procédé selon la revendication 9, dans lequel, lorsque le geste sélectionné consiste à appuyer deux fois, les informations de geste comprennent un temps depuis un toucher jusqu'à un relâchement du toucher pour une première action consistant à appuyer dans le geste consistant à appuyer deux fois, un temps depuis un toucher jusqu'à un relâchement du toucher pour une deuxième action consistant à appuyer, et un temps depuis un relâchement du toucher de la première action consistant à appuyer jusqu'à un toucher de la deuxième action consistant à appuyer.

14. Procédé selon la revendication 9, dans lequel, lorsque le geste sélectionné est un déplacement, les informations de geste comprennent un temps depuis un toucher jusqu'à un relâchement du toucher pour le déplacement, une distance de mouvement et un sens.

15. Procédé selon la revendication 9, dans lequel, lorsque le geste sélectionné est un geste de zoom, les informations de geste comprennent un taux de zoom pour le geste de zoom et une distance de mouvement entre une pluralité de régions touchées.

16. Procédé selon la revendication 9, dans lequel, lorsque le geste sélectionné est un geste de rotation, les informations de geste comprennent un taux de rotation pour le geste de rotation et un angle de rotation d'une région touchée.
